# EUROPEAN PATENT APPLICATION

(11) **EP 4 685 631 A1**
(43) Date of publication of application: **28.01.2026**
(21) Application number: 24787788.9
(22) Date of filing: 31.01.2024
(51) Int. Cl.: G06F 8/658

(54) **PROGRAM UPDATE METHOD AND APPARATUS, DEVICE, STORAGE MEDIUM, AND COMPUTER PROGRAM**

(30) Priority: 13.04.2023 CN 202310430410
(71) Applicant: Huawei Technologies Co., Ltd., Shenzhen, Guangdong 518129 (CN)
(72) Inventor: QIN, Liang, Shenzhen, Guangdong 518129 (CN); SUN, Chumin, Shenzhen, Guangdong 518129 (CN); ZHOU, Jun, Shenzhen, Guangdong 518129 (CN); SUN, Jie, Shenzhen, Guangdong 518129 (CN)
(74) Representative: Gill Jennings & Every LLP
(86) International application number: PCT/CN2024/075048
(87) International publication number: WO 2024/212682

(57) **Abstract**

This application discloses a program update method and apparatus, a device, a storage medium, and a computer program, and pertains to the field of intelligent terminals. The method includes: determining a matching sequence based on a first program file and a second program file, where the matching sequence includes a plurality of mutual matching fields, a plurality of self-matching fields, and a plurality of non-matching fields; and determining an operation sequence based on the plurality of mutual matching fields, and generating a differential package based on the matching sequence, the operation sequence, and a non-matching data stream. A same character string in program files of different versions of a same program is determined based on the program files of different versions, to obtain the matching sequence that includes the plurality of mutual matching fields, the plurality of self-matching fields, and the plurality of non-matching fields, and the operation sequence that indicates an execution order of the mutual matching fields. The matching sequence, the operation sequence, and the non-matching data stream are encoded, so that the differential package can be generated more quickly, and a faster and more traffic-saving program update can be implemented.

## Description

This application claims priority to Chinese Patent Application No. 202310430410.9, filed on April 13, 2023 and entitled "PROGRAM UPDATE METHOD AND APPARATUS, DEVICE, STORAGE MEDIUM, AND COMPUTER PROGRAM", which is incorporated herein by reference in its entirety.

### TECHNICAL FIELD

This application relates to the field of intelligent terminals, and in particular, to a program update method and apparatus, a device, a storage medium, and a computer program.

### BACKGROUND

Various programs run on an intelligent terminal, and these programs usually need to be updated and upgraded. In a related technology, a server generates a differential package based on a program file of an earlier version and a program file of a later version and by using a packaging tool, and sends the differential package to an intelligent terminal. The differential package indicates a difference between the program file of the earlier version and the program file of the later version. The intelligent terminal receives the differential package sent by the server, generates, by using a restoration tool, the program file of the later version based on the differential package and the program file that is of the earlier version and that is currently running, stores the program file of the later version in a hard disk, and deletes the program file of the earlier version and the differential package that are stored in the hard disk, to update and upgrade a program. However, a size of the differential package directly affects traffic costs, a development cycle, and the like that are required by the intelligent terminal to update the program.

### SUMMARY

This application provides a program update method and apparatus, a device, a storage medium, and a computer program, to implement a faster and more traffic-saving program update. The technical solutions are as follows.

According to a first aspect, a program update method is provided, and is applied to a server. In this method, a matching sequence is determined based on a first program file and a second program file, where the matching sequence includes a plurality of mutual matching fields, a plurality of self-matching fields, and a plurality of non-matching fields; an operation sequence is determined based on the plurality of mutual matching fields, where the operation sequence indicates an order of some or all of the plurality of mutual matching fields during restoration of the second program file, and when the second program file is restored in the order indicated by the operation sequence, character strings indicated by the plurality of mutual matching fields do not overlap; and a differential package is generated based on the matching sequence, the operation sequence, and the non-matching data stream, where the differential package indicates a difference between the first program file and the second program file.

The mutual matching field indicates that a character string in the second program file is the same as a character string in the first program file, the self-matching field indicates that a character string in the second program file is the same as another character string in the second program file, the non-matching field indicates that a character string in the second program file is the same as a character string in a non-matching data stream, the first program file and the second program file are program files of two different versions of a same program, and a version of the second program file is higher than a version of the first program file.

A same character string in program files of different versions of a same program is determined based on the program files of different versions, to obtain the matching sequence that includes the plurality of mutual matching fields, the plurality of self-matching fields, and the plurality of non-matching fields, and the operation sequence that indicates an execution order of the mutual matching fields. The matching sequence, the operation sequence, and the non-matching data stream are encoded, so that the differential package can be generated more quickly, and a faster and more traffic-saving program update can be implemented.

For example, the operation sequence is determined based on the plurality of mutual matching fields according to the following steps (1) and (2).
(1) Determine a directed graph based on the plurality of mutual matching fields, where the directed graph indicates a topological order of the plurality of mutual matching fields.

A plurality of vertices of the directed graph are determined based on an order of the plurality of mutual matching fields in the matching sequence, where the plurality of vertices one-to-one correspond to the plurality of mutual matching fields. Two vertices are selected from the plurality of vertices, and whether there is an intersection between mutual matching fields respectively corresponding to the two selected vertices is determined. When there is an intersection between the mutual matching fields respectively corresponding to the two selected vertices, a directed edge is drawn between the two selected vertices, and every two of the plurality of vertices are traversed in the same manner, to obtain the directed graph.

(2) When the directed graph includes a directed closed loop, perform loop removal on the directed graph to obtain the operation sequence.

When the directed graph includes the directed closed loop, a topological order of the plurality of mutual matching fields varies with a selected start point. That is, any vertex is selected from the directed closed loop as a start point of the topological order of the plurality of mutual matching fields, where the topological order of the plurality of mutual matching fields is related to the selected start point, and the topological order of the plurality of mutual matching fields is not unique. Therefore, loop removal needs to be performed on the directed graph.

For example, loop removal is performed on the directed graph in different manners to obtain the operation sequence. The following separately describes three manners.

In a first manner, the directed graph includes at least one directed closed loop. In this case, a target vertex in each of the at least one directed closed loop is removed, to obtain a vertex-removed directed graph, where the target vertex is a vertex in the directed closed loop. The operation sequence is determined based on a topological order of vertices in the vertex-removed directed graph, where the operation sequence indicates an order of mutual matching fields in the plurality of mutual matching fields other than a target mutual matching field during restoration of the second program file, and the target mutual matching field is a mutual matching field corresponding to the target vertex.

In a second manner, the directed graph includes at least one directed closed loop. In this case, a target vertex in each of the at least one directed closed loop is removed, to obtain a vertex-removed directed graph, where the target vertex is a vertex in the directed closed loop. The target vertex is placed at the end of the vertex-removed directed graph, to obtain a corrected topological order of the plurality of vertices. The operation sequence is determined based on the corrected topological order of the plurality of vertices, where the operation sequence indicates the order of the plurality of mutual matching fields during restoration of the second program file.

In a third manner, the directed graph includes at least one directed closed loop. In this case, a target edge in each of the at least one directed closed loop is removed, to obtain an edge-removed directed graph, where the target edge is an outgoing edge of a vertex corresponding to a first mutual matching field and is an incoming edge of a vertex corresponding to a second mutual matching field, and the first mutual matching field and the second mutual matching field are two of the plurality of mutual matching fields. The operation sequence is determined based on a topological order of vertices in the edge-removed directed graph, where the operation sequence indicates an order of the plurality of mutual matching fields during restoration of the second program file.

Loop removal is performed on the directed graph in different manners to obtain the operation sequence, and operation sequences obtained in different loop removal manners are also different. Therefore, processes of generating the differential package based on the matching sequence, the operation sequence, and the non-matching data stream are also different. The following separately describes the following three cases.

In a first case, loop removal is performed on the directed graph in the first manner to obtain the operation sequence. In this case, a character string that is indicated by a target mutual matching field and that is in the first program file is added to the non-matching data stream, to obtain an updated non-matching data stream. The target mutual matching field in the matching sequence is converted into a non-matching field, to obtain an updated matching sequence. The differential package is generated based on the updated matching sequence, the operation sequence, and the updated non-matching data stream.

In other words, when the directed graph includes the at least one directed closed loop, a target mutual matching field corresponding to a target vertex in each directed closed loop is converted into a non-matching field, to obtain the updated matching sequence. Then, the character string that is indicated by the target mutual matching field and that is in the first program file is added to the non-matching data stream to obtain the updated non-matching data stream, and the updated matching sequence, the operation sequence, and the updated non-matching data stream are encoded according to a related algorithm to obtain the differential package.

In a second case, loop removal is performed on the directed graph in the second manner to obtain the operation sequence. In this case, a first identifier is added to a target mutual matching field in the matching sequence, to obtain an updated matching sequence, where the first identifier indicates that an operation manner corresponding to the target mutual matching field is a first-type shelving operation. The differential package is generated based on the updated matching sequence, the operation sequence, and the non-matching data stream.

To be specific, in a process of performing loop removal on the directed graph in the foregoing second manner, a target vertex in each directed closed loop is placed at the end of another vertex in each directed closed loop. This changes an order of the plurality of mutual matching fields during restoration of the second program file, but does not remove the target mutual matching field in the matching sequence. Then, the updated matching sequence, the operation sequence, and the non-matching data stream are encoded according to a related algorithm to obtain the differential package.

The first-type shelving operation means that a character string that is indicated by the target mutual matching field and that is in the first program file is not moved temporarily, but character strings that are indicated by other mutual matching fields and that are in the first program file are first moved in an order that is of the other mutual matching fields and that is indicated by the operation sequence. Then, the character string that is indicated by the target mutual matching field and that is in the first program file is moved. The other mutual matching fields and the target mutual matching field belong to a same operation sequence, that is, vertices corresponding to the other mutual matching fields and a vertex corresponding to the target mutual matching field belong to a same directed subgraph.

In a third case, loop removal is performed on the directed graph in the third manner to obtain the operation sequence. In this case, a second identifier is added to a first mutual matching field in the matching sequence, to obtain an updated matching sequence, where the second identifier indicates that an operation manner corresponding to the first mutual matching field is a second-type shelving operation. The differential package is generated based on the updated matching sequence, the operation sequence, and the non-matching data stream.

To be specific, in a process of performing loop removal on the directed graph in the foregoing third manner, only an execution order of the first mutual matching field during restoration of the second program file is changed, and the first mutual matching field in the matching sequence is not removed. Then, the updated matching sequence, the operation sequence, and the non-matching data stream are encoded according to a related algorithm to obtain the differential package.

The second-type shelving operation means that an overlapping character string that is connected to a target edge and that is between a character string that is indicated by the first mutual matching field and that is in the first program file and a character string that is indicated by a second mutual matching field and that is in the second program file is not moved temporarily, but other character strings that are indicated by mutual matching fields and that are in the first program file are first moved in an order that is of the mutual matching fields and that is indicated by the same operation sequence. Then, the overlapping character string in the first program file is moved.

It should be noted that, when loop removal is performed on the directed graph in the foregoing three manners, there is no need to consider how many directed subgraphs are included in the directed graph and have directed closed loops. In other words, there is no need to consider whether the directed graph includes a plurality of areas connected through an edge, and each area has a directed closed loop. Instead, after the directed graph is determined based on the plurality of mutual matching fields, when the directed graph includes the directed closed loop, loop removal is directly performed on the directed graph in any one of the foregoing three manners. In actual application, when the directed graph includes a plurality of directed subgraphs having directed closed loops, if loop removal is directly performed on the directed graph in any one of the foregoing three manners, efficiency of loop removal on the directed graph is affected. Therefore, to improve efficiency of loop removal on the directed graph, the directed graph is first partitioned into a plurality of directed subgraphs, and then loop removal is performed on each directed subgraph. That is, when the directed graph includes one directed subgraph having a directed closed loop, loop removal is performed on the directed subgraph in any one of the foregoing three manners to obtain one operation sequence. When the directed graph includes a plurality of directed subgraphs having directed closed loops, an edge between the plurality of directed subgraphs is first removed, and then loop removal is performed on each of the plurality of directed subgraphs in any one of the foregoing three manners, to obtain a plurality of operation sequences, where the plurality of operation sequences one-to-one correspond to the plurality of directed subgraphs.

According to a second aspect, a program update method is provided, and is applied to an intelligent terminal. In this method, a differential package is obtained, where the differential package indicates a difference between a first program file and a second program file, the first program file and the second program file are program files of two different versions of a same program, and a version of the second program file is higher than a version of the first program file. The differential package is parsed to obtain a matching sequence, an operation sequence, and a non-matching data stream, where the matching sequence includes a plurality of mutual matching fields, a plurality of self-matching fields, and a plurality of non-matching fields, the operation sequence indicates an order of the plurality of mutual matching fields during restoration of the second program file, the mutual matching field indicates that a character string in the second program file is the same as a character string in the first program file, the self-matching field indicates that a character string in the second program file is the same as another character string in the second program file, and the non-matching field indicates that a character string in the second program file is the same as a character string in the non-matching data stream. Character strings that are indicated by the plurality of mutual matching fields and that are in the first program file are moved in the order indicated by the operation sequence, character strings that are indicated by the plurality of self-matching fields and that are in the first program file are moved in an order of the plurality of self-matching fields and the plurality of non-matching fields in the matching sequence, and character strings that are indicated by the plurality of non-matching fields and that are in the non-matching data stream are moved into the first program file, to obtain the second program file.

A restoration tool on the intelligent terminal is improved, so that the character strings that are indicated by the plurality of mutual matching fields and that are in the first program file are first moved in the order indicated by the operation sequence, and then the character strings that are indicated by the plurality of self-matching fields and the plurality of non-matching fields and that are in the first program file are moved in the order that is of the plurality of self-matching fields and the plurality of non-matching fields and that is indicated by the matching sequence. In this way, the second program file can be directly restored in a complete and non-overlapping manner based on the first program file by using the plurality of mutual matching fields, the plurality of self-matching fields, and the plurality of non-matching fields. In comparison with a related technology in which a complete second program file is first generated and then the first program file is replaced with the second program file, in this embodiment of this application, the second program file can be directly obtained by moving and modifying a character string in the first program file. That is, the second program file is obtained by moving the character string in the first program file and filling the non-matching data stream, so that occupation of space of a hard disk of the intelligent terminal can be reduced, and program update efficiency can be improved.

After obtaining the differential package, the intelligent terminal parses the differential package according to a related algorithm, to obtain a matching sequence, the operation sequence, and the non-matching data stream. The matching sequence obtained by the intelligent terminal by parsing the differential package is not the matching sequence determined by the server based on the first program file and the second program file according to the foregoing steps, but is an updated matching sequence obtained by the server by performing loop removal on a directed graph. In other words, the server first determines an initial matching sequence based on the first program file and the second program file, and updates the initial matching sequence in a process in which the server performs loop removal on the directed graph, to obtain the updated matching sequence. The updated matching sequence includes a plurality of mutual matching fields, and the plurality of mutual matching fields are some or all of a plurality of mutual matching fields included in the initial matching sequence.

Based on the foregoing description, in a process of performing loop removal on the directed graph, an operation manner corresponding to a target mutual matching field corresponding to a target vertex is converted into a first-type shelving operation, or an operation manner corresponding to a first mutual matching field corresponding to a target edge is converted into a second-type shelving operation. In different cases, manners of moving, in the order indicated by the operation sequence, the character strings that are indicated by the plurality of mutual matching fields and that are in the first program file are different. Therefore, the following separately describes the two cases.

In a first case, the operation manner corresponding to the target mutual matching field corresponding to the target vertex is converted into the first-type shelving operation. A mutual matching field is selected from the plurality of mutual matching fields in the order indicated by the operation sequence. When the selected mutual matching field does not include a first identifier, a character string that is indicated by the selected mutual matching field and that is in the first program file is moved. Alternatively, when the selected mutual matching field includes a first identifier, a character string indicated by the selected mutual matching field is obtained from a target location, and the obtained character string is moved into the first program file, where the first identifier indicates that an operation manner corresponding to the selected mutual matching field is the first-type shelving operation.

The target location may be an idle area of a hard disk of the intelligent terminal or another external storage device. To be specific, before the intelligent terminal moves, in the order indicated by the operation sequence, the character strings that are indicated by the plurality of mutual matching fields and that are in the first program file, the intelligent terminal further needs to move, to the idle area of the hard disk or the another external storage device, character strings that are indicated by mutual matching fields whose operation manners are the first-type shelving operation and the second-type shelving operation and that are in the first program file. In this way, character strings indicated by mutual matching fields can avoid being overwritten, thereby preventing a conflict caused by character string movement. For example, when a first mutual matching field includes the first identifier, a character string that is indicated by the first mutual matching field and that is in the first program file is obtained, and the character string indicated by the first mutual matching field is stored in the target location, where the first mutual matching field is any one of the plurality of mutual matching fields. Alternatively, when the first mutual matching field includes a second identifier, an overlapping character string between a character string that is indicated by the first mutual matching field and that is in the first program file and a character string that is indicated by a second mutual matching field and that is in the second program file is obtained, and the overlapping character string is stored in a target location, where the first mutual matching field is restored earlier than the second mutual matching field during restoration of the second program file.

It should be noted that, to avoid a conflict caused by movement of character strings indicated by the mutual matching fields, before the intelligent terminal moves, in the order indicated by the operation sequence, the character strings that are indicated by the plurality of mutual matching fields and that are in the first program file, the intelligent terminal moves, to the idle area of the hard disk or the another external storage device, the character strings indicated by the mutual matching fields whose operation manners are the first-type shelving operation and the second-type shelving operation. This is merely an example. Optionally, in a process of moving the character strings that are indicated by the plurality of mutual matching fields and that are in the first program file, the intelligent terminal can further parse, from the differential package in real time, the character strings indicated by the mutual matching fields whose operation manners are the first-type shelving operation and the second-type shelving operation. In other words, after determining, according to the foregoing step 503, operation manners corresponding to the mutual matching fields, the server compiles, into the differential package, the character strings indicated by the mutual matching fields whose operation manners are the first-type shelving operation and the second-type shelving operation. In this way, after receiving the differential package sent by the server, the intelligent terminal can directly parse, from the differential package, the character strings indicated by the mutual matching fields whose operation manners are the first-type shelving operation and the second-type shelving operation.

In a second case, the operation manner corresponding to the first mutual matching field corresponding to the target edge is converted into the second-type shelving operation. A mutual matching field is selected from the plurality of mutual matching fields in the order indicated by the operation sequence. When the selected mutual matching field does not include a second identifier, a character string that is indicated by the selected mutual matching field and that is in the first program file is moved. Alternatively, when the selected mutual matching field includes a second identifier, a movable character string is determined based on a character string that is indicated by the selected mutual matching field and that is in the first program file and an overlapping character string that corresponds to the selected mutual matching field and that is stored in a target location, and the movable character string in the first program file is moved, where the second identifier indicates that an operation manner corresponding to the selected mutual matching field is the second-type shelving operation. When the selected mutual matching field is a last mutual matching field in the plurality of mutual matching fields, after the movable character string is moved, the overlapping character string is moved into the first program file to be concatenated with the movable character string.

According to a third aspect, a program update apparatus is provided. The program update apparatus has a function of implementing behavior of the program update method in the first aspect. The program update apparatus includes at least one module, and the at least one module is configured to implement the program update method provided in the first aspect.

According to a fourth aspect, a program update apparatus is provided. The program update apparatus has a function of implementing behavior of the program update method in the second aspect. The program update apparatus includes at least one module, and the at least one module is configured to implement the program update method provided in the second aspect.

According to a fifth aspect, a computer device is provided. The computer device includes a processor and a memory, and the memory is configured to store a computer program for performing the program update method provided in the first aspect or the second aspect. The processor is configured to execute the computer program stored in the memory, to implement the program update method according to the first aspect or the second aspect.

Optionally, the computer device may further include a communication bus, and the communication bus is configured to establish a connection between the processor and the memory.

According to a sixth aspect, a computer-readable storage medium is provided. The storage medium stores instructions, and when the instructions are run on a computer, the computer is enabled to perform steps of the program update method according to the first aspect or the second aspect.

According to a seventh aspect, a computer program product including instructions is provided. When the instructions are run on a computer, the computer is enabled to perform steps of the program update method according to the first aspect or the second aspect. In other words, a computer program is provided. When the computer program is run on a computer, the computer is enabled to perform steps of the program update method according to the first aspect or the second aspect.

Technical effect obtained in the second aspect to the seventh aspect is similar to technical effect obtained by using corresponding technical means in the first aspect or the second aspect. Details are not described herein again.

### BRIEF DESCRIPTION OF DRAWINGS

FIG. 1 is a diagram of a program update method according to an embodiment of a related technology;
FIG. 2 is a diagram of a program update method according to an embodiment of this application;
FIG. 3 is a diagram of an architecture of a program update system according to an embodiment of this application;
FIG. 4 is a diagram of a program update method according to an embodiment of this application;
FIG. 5 is a flowchart of a program update method according to an embodiment of this application;
FIG. 6 is a diagram of determining a directed graph according to an embodiment of this application;
FIG. 7 is a diagram of performing loop removal on a directed graph according to an embodiment of this application;
FIG. 8 is another diagram of performing loop removal on a directed graph according to an embodiment of this application;
FIG. 9 is still another diagram of performing loop removal on a directed graph according to an embodiment of this application;
FIG. 10 is yet another diagram of performing loop removal on a directed graph according to an embodiment of this application;
FIG. 11 is a flowchart of a differential process according to an embodiment of this application;
FIG. 12 is a flowchart of another program update method according to an embodiment of this application;
FIG. 13 is a flowchart of a restoration process according to an embodiment of this application;
FIG. 14 is a diagram of a structure of a program update apparatus according to an embodiment of this application;
FIG. 15 is a diagram of a structure of a program update apparatus according to an embodiment of this application; and
FIG. 16 is a diagram of a structure of a computer device according to an embodiment of this application.

### DESCRIPTION OF EMBODIMENTS

To make the objectives, technical solutions, and advantages of this application clearer, the following further describes implementations of this application in detail with reference to accompanying drawings.

Before a program update method provided in embodiments of this application is described in detail, a service scenario and a system architecture in embodiments of this application are first described.

First, the service scenario in embodiments of this application is described.

To update and upgrade an application program or an operating system running on an intelligent terminal, a related technology provides a plurality of methods. After a development department formulates, develops, and generates a second program file, the development department generates a differential package based on a first program file and the second program file by using a packaging tool. When a program needs to be updated and upgraded, the intelligent terminal downloads the differential package from a server, generates the second program file based on the first program file and the differential package by using a restoration tool, stores the second program file to a hard disk, and deletes the first program file and the differential package that are stored in the hard disk.

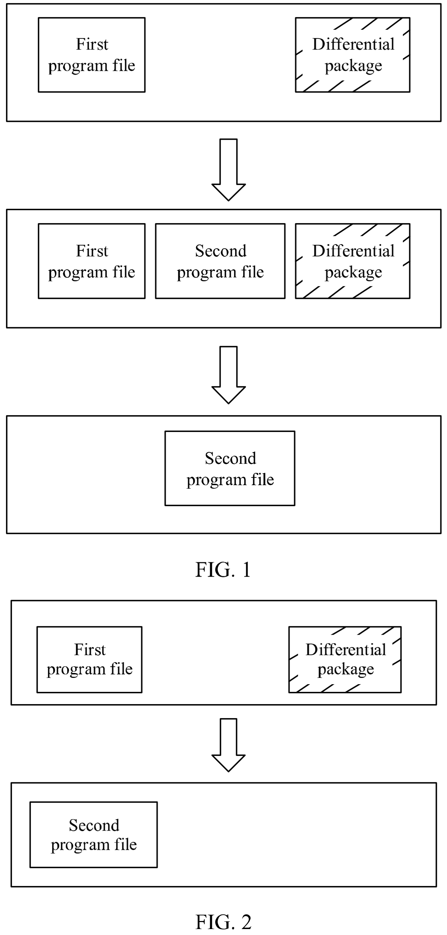

For example, FIG. 1 is a diagram of a program update method according to an embodiment of a related technology. In FIG. 1, a hard disk of an intelligent terminal stores a first program file that is currently running and a differential package downloaded from a server, and the intelligent terminal generates a complete second program file based on the first program file and the differential package. Then, the second program file stored in the hard disk is retained, and the first program file and the differential package that are stored in the hard disk are deleted, to update a program.

It should be noted that, when the program is updated according to the foregoing method, some character strings in the first program file need to be copied to the second program file based on the differential package. In other words, some character strings in the second program file are obtained by copying the first program file. Because the second program file is stored in the hard disk of the intelligent terminal, a size of available space of the hard disk of the intelligent terminal needs to be at least equal to a size of the second program file. However, in actual application, a size of available space of a hard disk of an intelligent terminal may be far less than a size of a second program file, that is, the intelligent terminal is a thin device. In this case, a program cannot be updated by first generating a complete second program file and then replacing a first program file with the second program file. Therefore, embodiments of this application provide a program update method. According to the program update method provided in embodiments of this application, an operation is performed on a first program file directly based on a differential package, to update the first program file to a second program file, thereby updating and upgrading a program. For example, FIG. 2 is a diagram of a program update method according to an embodiment of this application. In FIG. 2, a hard disk of an intelligent terminal stores a first program file that is currently running and a differential package downloaded from a server, and the intelligent terminal moves a character string in the first program file directly based on the differential package, to obtain a second program file, thereby reducing occupation of space of the hard disk of the intelligent terminal.

Then, the system architecture in embodiments of this application is described.

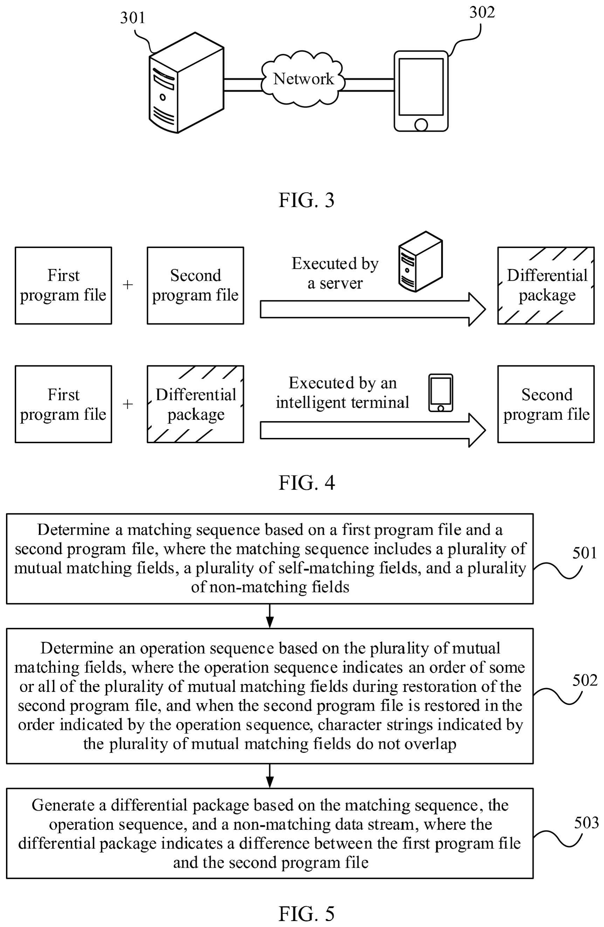

FIG. 3 is a diagram of an architecture of a program update system according to an example embodiment. The program update system includes a server 301 and an intelligent terminal 302. The server 301 is communicatively connected to the intelligent terminal 302. The communication connection may be a wired connection or a wireless connection. This is not limited in embodiments of this application.

The server 301 is configured to: determine a matching sequence based on a first program file and a second program file, where the matching sequence includes a plurality of mutual matching fields, a plurality of self-matching fields, and a plurality of non-matching fields; determine an operation sequence based on the plurality of mutual matching fields, where the operation sequence indicates an order of some or all of the plurality of mutual matching fields during restoration of the second program file, and when the second program file is restored in the order indicated by the operation sequence, character strings indicated by the plurality of mutual matching fields do not overlap; and generate a differential package based on the matching sequence, the operation sequence, and a non-matching data stream, where the differential package indicates a difference between the first program file and the second program file.

The server 301 is further configured to send the differential package to the intelligent terminal 302. The intelligent terminal 302 parses the differential package to obtain the matching sequence, the operation sequence, and the non-matching data stream, first moves, in the order indicated by the operation sequence, character strings that are indicated by the mutual matching fields and that are in the first program file, then moves, in an order of the self-matching fields and the non-matching fields in the matching sequence, character strings that are indicated by the self-matching fields and that are in the first program file, and moves, into the first program file, character strings that are indicated by the non-matching fields and that are in the non-matching data stream, to obtain the second program file.

The server 301 may be an independent server, may be a server cluster or a distributed system including a plurality of physical servers, may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform, or may be a cloud computing service center.

The intelligent terminal 302 may be any electronic product that can perform human-computer interaction with a user in one or more manners such as through a keyboard, a touchpad, a touchscreen, a remote control, voice interaction, or a handwriting device. For example, the intelligent terminal 302 may be a personal computer (personal computer, PC), a mobile phone, a smartphone, a personal digital assistant (personal digital assistant, PDA), a wearable device, a pocket palmtop computer (pocket pc, PPC), a tablet computer, a smart head unit, a smart television, a smart speaker, a sports watch, a robot vacuum cleaner, an intelligent lock, and the like.

A person skilled in the art should understand that the server 301 and the intelligent terminal 302 are merely examples. Other conventional or future servers or intelligent terminals that are applicable to embodiments of this application should also fall within the protection scope of embodiments of this application, and are included herein by reference.

It should be noted that the service scenario and the system architecture described in embodiments of this application are intended to describe the technical solutions in embodiments of this application more clearly, and do not constitute a limitation on the technical solutions provided in embodiments of this application. A person of ordinary skill in the art may be aware that, as a system architecture evolves and a new service scenario emerges, the technical solutions provided in embodiments of this application are also applicable to a similar technical problem.

Generally, a program update process includes two processes: a differential process and a restoration process. The differential process is performed by the server, and the restoration process is performed by the intelligent terminal. That is, a program is updated through interaction between the server and the intelligent terminal. For example, FIG. 4 is a diagram of a program update method according to an embodiment of this application. In FIG. 4, a server generates a differential package based on a first program file and a second program file, and an intelligent terminal generates the second program file based on the first program file and the differential package.

The program update method provided in embodiments of this application includes two phases: a differential process and a restoration process. Therefore, the two processes are separately described below.

First, the differential process is explained and described in detail. FIG. 5 is a flowchart of a program update method according to an embodiment of this application. The method is applied to a server. Refer to FIG. 5. The method includes the following steps.

Step 501: Determine a matching sequence based on a first program file and a second program file, where the matching sequence includes a plurality of mutual matching fields, a plurality of self-matching fields, and a plurality of non-matching fields.

The mutual matching field indicates that a character string in the second program file is the same as a character string in the first program file, the self-matching field indicates that a character string in the second program file is the same as another character string in the second program file, and the non-matching field indicates that a character string in the second program file is the same as a character string in a non-matching data stream. The first program file and the second program file are program files of two different versions of a same program, and a version of the second program file is higher than a version of the first program file

In some embodiments, the matching sequence is determined based on the first program file, the second program file, and a related algorithm like a dynamic programming algorithm. Certainly, in actual application, the matching sequence determined based on the first program file and the second program file is not unique. For example, a plurality of matching sequences are determined based on the first program file and the second program file, and then a matching sequence with a shortest encoding length is selected from the plurality of matching sequences.

Optionally, each of the plurality of mutual matching fields is a triplet, each mutual matching field includes a matching type, a matching distance, and a quantity of matched bytes, and each mutual matching field indicates a character string in the second program file and a character string in the first program file, and indicates that the two character strings are the same. The matching distance is a distance that is indicated by the mutual matching field and that is between a start location of the character string in the second program file and a start location of the corresponding character string in the first program file, the quantity of matched bytes is a quantity of bytes included in the character string that is indicated by the mutual matching field and that is in the second program file or the first program file, and both the matching distance and the quantity of matched bytes are integers.

For example, the first program file is denoted as S, and the second program file is denoted as T. The mutual matching field is *M =* (*oldmatch, dis*tan*ce, length*)*,* and the mutual matching field indicates that *S*[t *- dis*tan*ce,* t *- dis*tan*ce + length*) is the same as *T*[t*,*t *+ length*) *. S* [t *- dis*tan*ce, t - dis*tan*ce + length*) indicates a character string in the first program file, a start location of the character string is *t-dis*tan*ce,* and a quantity of bytes included in the character string is *length*. *T*[t,t *length*) indicates a character string in the second program file, a start location of the character string is t , and a quantity of bytes included in the character string is *length .* In other words, a mutual matching field indicates a character string in the second program file and a character string in the first program file, and indicates that the two character strings are the same. The mutual matching field *M =* (*oldmatch, dis*tan*ce,length*) indicates that character strings from t to t*+length* in the second program file are the same as character strings from t*-dis*tan*ce* to *t-dis*tan*ce+length* in the first program file.

Certainly, in actual application, a mutual matching field may further include other data, for example, a start location of a character string in the second program file, provided that the mutual matching field can indicate that a character string in the second program file is the same as a character string in the first program file. This is not limited in embodiments of this application.

Optionally, each of the plurality of self-matching fields is a triplet, and each self-matching field includes a matching type, a matching distance, and a quantity of matched bytes. Each self-matching field indicates two character strings in the second program file, and indicates that the two character strings are the same. The matching distance is a distance between start locations of the two same character strings that are indicated by the self-matching field and that are in the second program file, and the quantity of matched bytes is a quantity of bytes included in any one of the two same character strings that are indicated by the self-matching field and that are in the second program file.

For example, it is assumed that the self-matching field is *M =* (*selfmatch, dis*tan*ce,length*) , and the self-matching field indicates that *T*[t *- dis*tan*ce, t - dis*tan*ce + length*) is the same as *T*[t,t *+ length*) . *T*[*t - dis*tan*ce,*t *- dis*tan*ce + length*) indicates a character string in the second program file, a start location of the character string is t*-dis*tan*ce,* and a quantity of bytes included in the character string is *length. T*[t,t *+ length*) indicates another character string in the second program file, a start location of the character string is t , and a quantity of bytes included in the character string is *length .* In other words, a self-matching field indicates two character strings in the second program file, and indicates that the two character strings are the same. The self-matching field *M =* (*selfmatch, dis*tan*ce,length*) indicates that character strings from t to t*+length* in the second program file are the same as character strings from t*-dis*tan*ce* to *t-dis*tan*ce+length* in the second program file.

Optionally, each of the plurality of non-matching fields is a triplet, and each non-matching field includes a matching type, a matching distance, and a quantity of matched bytes. Each non-matching field indicates a character string in the second program file and a character string in the non-matching data stream, and indicates that the two character strings are the same. The matching distance is a distance that is indicated by the non-matching matching field and that is between a start location of the character string in the second program file and a start location of the corresponding character string in the non-matching data stream, and the quantity of matched bytes is a quantity of bytes included in the character string that is indicated by the non-matching field and that is in the second program file or the non-matching data stream.

It should be noted that the non-matching data stream includes a plurality of character strings, and the plurality of character strings one-to-one correspond to the plurality of non-matching fields. A start location of a first character string in the non-matching data stream is a start location of the non-matching data stream, and a start location of an i^{th} character string in the non-matching data stream is a total quantity of bytes included in first i-1 character strings in the non-matching data stream. Therefore, in actual application, to reduce a quantity of bits required for encoding and improve encoding efficiency, each of the plurality of non-matching fields includes only a matching type and a quantity of matched bytes.

For example, it is assumed that a non-matching field is *M =* (*nonmatch, length*)*,* the non-matching field indicates that a character string *T*[t,t *+ length*) in the second program file is the same as a character string in the non-matching data stream, a start location of the character string is t , and a quantity of bytes included in the character string is *length.*

It should be noted that the non-matching data stream may include character strings in the second program file other than character strings indicated by the mutual matching fields and the self-matching fields. Certainly, the non-matching data stream may alternatively be obtained in another manner, provided that the non-matching data stream includes a character string indicated by each non-matching field.

Optionally, an order of matching fields in the matching sequence increases forward from a start location of the second program file. It is assumed that the matching sequence includes three matching fields, and an order of the three matching fields is sequentially a non-matching field *M =* (*nonmatch, l*₁), a mutual matching field *M =* (*oldmatch,d₂,l₂*), and a self-matching field *M =* (*selfmatch,d₃,l₃*)*.* That is, the second program file includes three areas. A first area corresponds to the non-matching field *M =* (*nonmatch,l*₁), a second area corresponds to the mutual matching field *M =* (*oldmatch,d*₂*,l*₂)*,* and a third area corresponds to the self-matching field *M =* (*selfmatch,d*_{3,}*l*₃)*.* A start location of the first area is t₁, that is, the start location of the second program file. A start location of the second area is t₂, where t₂ = t₁ + *l*₁. A start location of the third area is t₃, where t₃ = t₂ + *l*₂. A character string *T*[t₁,t₁ + *l*₁) in the first area is the same as a character string in the non-matching data stream, a character string *T*[t₂, t₂ + *l*₂) in the second area is the same as a character string *S*[t₂ -*d*₂, t₂ *-d₂ + l₂*) in the first program file, and a character string *T*[t₃, t₃ *+ l*₃) in the third area is the same as a character string *T*[t₃ *- d*₃*,* t₃ *- d*₃ *+l*₃) in the second program file.

Step 502: Determine an operation sequence based on the plurality of mutual matching fields, where the operation sequence indicates an order of some or all of the plurality of mutual matching fields during restoration of the second program file, and when the second program file is restored in the order indicated by the operation sequence, character strings indicated by the plurality of mutual matching fields do not overlap.

In some embodiments, the operation sequence is determined based on the plurality of mutual matching fields according to the following steps (1) and (2).
(1) Determine a directed graph based on the plurality of mutual matching fields, where the directed graph indicates a topological order of the plurality of mutual matching fields.

A plurality of vertices of the directed graph are determined based on an order of the plurality of mutual matching fields in the matching sequence, where the plurality of vertices one-to-one correspond to the plurality of mutual matching fields. Two vertices are selected from the plurality of vertices, and whether there is an intersection between mutual matching fields respectively corresponding to the two selected vertices is determined. When there is an intersection between the mutual matching fields respectively corresponding to the two selected vertices, a directed edge is drawn between the two selected vertices, and every two of the plurality of vertices are traversed in the same manner, to obtain the directed graph.

For ease of description, the two selected vertices are referred to as a first vertex and a second vertex. When there is an intersection between a mutual matching field corresponding to the first vertex and a mutual matching field corresponding to the second vertex, a directed edge is drawn between the first vertex and the second vertex. When there is no intersection between the mutual matching field corresponding to the first vertex and the mutual matching field corresponding to the second vertex, no directed edge is drawn between the first vertex and the second vertex.

Based on the foregoing description, that a mutual matching field indicates a character string in the second program file and a character string in the first program file also means that a mutual matching field indicates a location of a character string in the first program file before the character string is moved and a location of the character string in the first program file after the character string is moved. When there is an intersection between the mutual matching field corresponding to the first vertex and the mutual matching field corresponding to the second vertex, it indicates that there is an intersection between a location of a character string indicated by the mutual matching field corresponding to the first vertex after the character string is moved and a location of a character string indicated by the mutual matching field corresponding to the second vertex before the character string is moved. Consequently, after the character string that is indicated by the mutual matching field corresponding to the first vertex and that is in the first program file is moved, the character string indicated by the mutual matching field corresponding to the second vertex is overwritten, and cannot continue to be moved. As a result, a conflict caused by character string movement occurs. To avoid the conflict caused by character string movement and ensure that the intelligent terminal normally restores the second program file, the mutual matching field corresponding to the second vertex needs to be executed before the mutual matching field corresponding to the first vertex. Therefore, a directed edge is constructed between the first vertex and the second vertex, and a direction of the directed edge points from the second vertex to the first vertex.

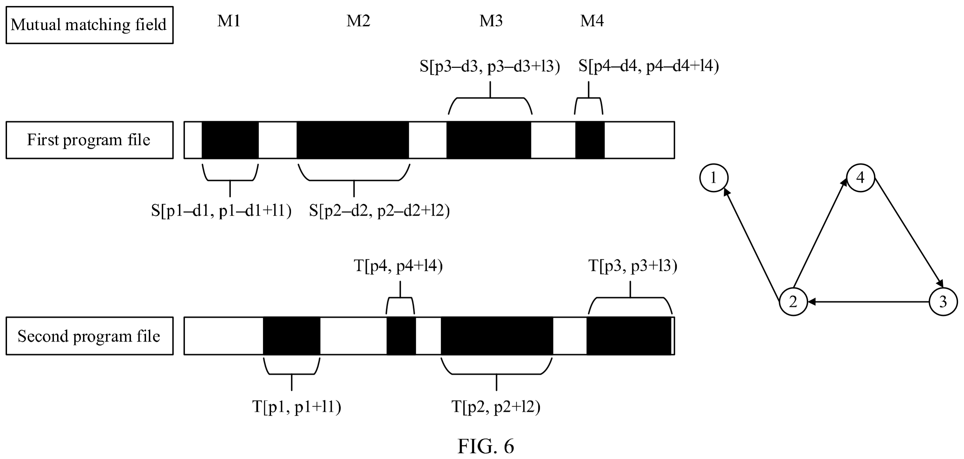

For example, the matching sequence includes four mutual matching fields M1, M2, M3, and M4 that are sequentially arranged. It is determined, based on the four mutual matching fields, that the directed graph includes four vertices, a first vertex 1 and a second vertex 2 are selected from the four vertices, a mutual matching field corresponding to the first vertex 1 is M1, and a mutual matching field corresponding to the second vertex 2 is M2. As shown in FIG. 6, *M*1*=*(*oldmatch,d*1*,l*1*,p*1) indicates that a character string *T*[*p*1, *p*1 + *l*1) in the second program file is obtained by moving a character string *S*[*p*1*-d*1, *p*1-*d*1*+l*1) in the first program file. *M*2 *=* (*oldmatch,d*2*,l*2*,p*2) indicates that a character string *T*[*p*2,*p*2+*l*2) in the second program file is obtained by moving a character string *S*[*p*2 *- d*2*, p*2 *- d*2 *+l2*) in the first program file. There is an intersection between *T*[*p*1*,p*1*+l*1) and *S*[*p*2*-d*2*,p*2*-d*2*+l*2)*.* Therefore, the mutual matching field M2 corresponding to the second vertex 2 needs to be executed before the mutual matching field M1 corresponding to the first vertex 1, so that a directed edge pointing from the second vertex 2 to the first vertex 1 is constructed between the first vertex 1 and the second vertex 2, and every two of the plurality of vertices are sequentially traversed, to obtain a directed graph shown in FIG. 6.

(2) When the directed graph includes a directed closed loop, perform loop removal on the directed graph to obtain the operation sequence.

When the directed graph includes the directed closed loop, a topological order of the plurality of mutual matching fields varies with a selected start point. That is, any vertex is selected from the directed closed loop as a start point of the topological order of the plurality of mutual matching fields, where the topological order of the plurality of mutual matching fields is related to the selected start point, and the topological order of the plurality of mutual matching fields is not unique. Therefore, loop removal needs to be performed on the directed graph.

In some embodiments, loop removal is performed on the directed graph in different manners to obtain the operation sequence. The following separately describes three manners.

In a first manner, the directed graph includes at least one directed closed loop. In this case, a target vertex in each of the at least one directed closed loop is removed, to obtain a vertex-removed directed graph, where the target vertex is a vertex in the directed closed loop. The operation sequence is determined based on a topological order of vertices in the vertex-removed directed graph, where the operation sequence indicates an order of mutual matching fields in the plurality of mutual matching fields other than a target mutual matching field during restoration of the second program file, and the target mutual matching field is a mutual matching field corresponding to the target vertex.

The directed graph includes the at least one directed closed loop, and the target vertex in each of the at least one directed closed loop needs to be removed, to obtain the vertex-removed directed graph. That is, a target vertex is determined from a plurality of vertices included in any one of the at least one directed closed loop, the target vertex in the directed closed loop is removed, and a target vertex in another directed closed loop in the at least one directed closed loop is removed in the same manner, to obtain a vertex-removed directed graph.

According to the foregoing content, each of the at least one directed closed loop includes the target vertex, and the mutual matching field corresponding to the target vertex is referred to as the target mutual matching field. The vertex-removed directed graph includes other vertices other than target vertices. Because the vertices one-to-one correspond to the mutual matching fields, the topological order of the vertices in the vertex-removed directed graph is directly determined as an order of mutual matching fields other than target mutual matching fields during restoration of the second program file, to obtain the operation sequence. That is, the operation sequence indicates an order of some of the plurality of mutual matching fields during restoration of the second program file.

For example, a vertex corresponding to a minimum quantity of character strings indicated by a mutual matching field is determined from a plurality of vertices included in any one of the at least one directed closed loop, to obtain a target vertex of the directed closed loop. In other words, a target mutual matching field corresponding to the target vertex indicates the minimum quantity of character strings. This helps reduce a size of the differential package. Certainly, in actual application, a target vertex of a directed closed loop can be further determined in another manner, provided that a size of a subsequently generated differential package is minimized.

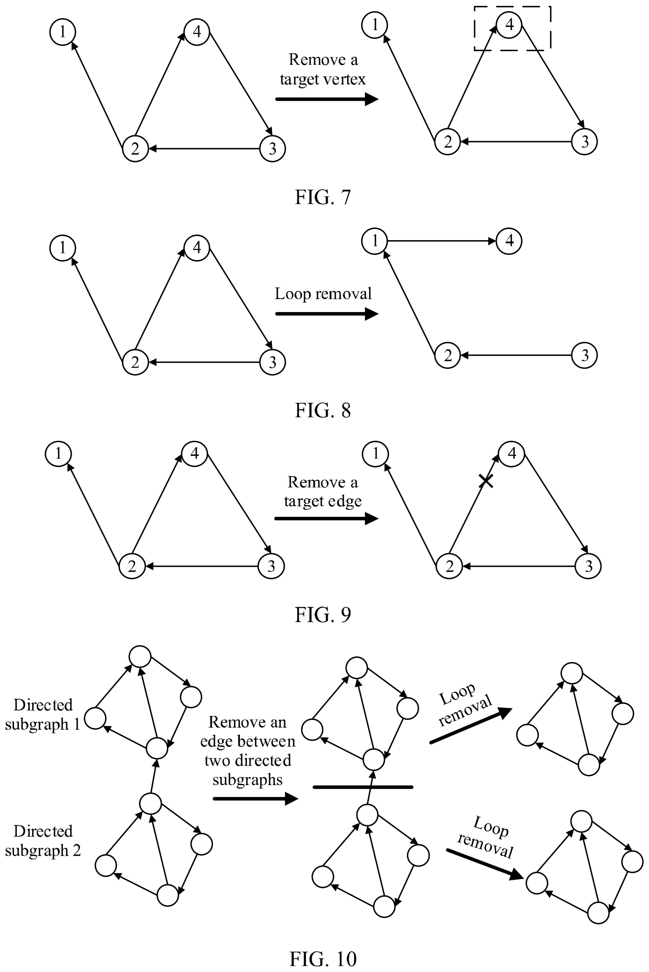

For example, FIG. 7 is a diagram of performing loop removal on a directed graph according to an embodiment of this application. In the left figure of FIG. 7, a directed graph includes one directed closed loop, and the directed graph includes four vertices 1, 2, 3, and 4. A mutual matching field corresponding to the vertex 1 is M1, a mutual matching field corresponding to the vertex 2 is M2, a mutual matching field corresponding to the vertex 3 is M3, and a mutual matching field corresponding to the vertex 4 is M4. It is assumed that a target vertex in the directed closed loop is the vertex 4, and a vertex-removed directed graph obtained by removing the vertex 4 is shown in the right figure. The vertex-removed directed graph includes vertices 1, 2, and 3. It is determined, based on a topological order of the vertices in the vertex-removed directed graph, that an order of other mutual matching fields other than the mutual matching field M4 during restoration of the second program file is {M3, M2, M1}, that is, the operation sequence is C={M3, M2, M1}.

In a second manner, the directed graph includes at least one directed closed loop. In this case, a target vertex in each of the at least one directed closed loop is removed, to obtain a vertex-removed directed graph, where the target vertex is a vertex in the directed closed loop. The target vertex is placed at the end of the vertex-removed directed graph, to obtain a corrected topological order of the plurality of vertices. The operation sequence is determined based on the corrected topological order of the plurality of vertices, where the operation sequence indicates an order of the plurality of mutual matching fields during restoration of the second program file.

Based on the foregoing description, each of the at least one directed closed loop includes the target vertex, and a mutual matching field corresponding to the target vertex is referred to as a target mutual matching field. The vertex-removed directed graph includes other vertices other than target vertices, and the target vertices are placed at the end of the vertex-removed directed graph, to obtain a loop-removed directed graph. The loop-removed directed graph includes a plurality of vertices that one-to-one correspond to the plurality of mutual matching fields. Therefore, the corrected topological order of the plurality of vertices is directly determined as an order of the plurality of mutual matching fields during restoration of the second program file, to obtain the operation sequence. That is, the operation sequence indicates an order of all of the plurality of mutual matching fields during restoration of the second program file.

For example, FIG. 8 is another diagram of performing loop removal on a directed graph according to an embodiment of this application. In the left figure of FIG. 8, a directed graph includes one directed closed loop, and the directed graph includes four vertices 1, 2, 3, and 4. A mutual matching field corresponding to the vertex 1 is M1, a mutual matching field corresponding to the vertex 2 is M2, a mutual matching field corresponding to the vertex 3 is M3, and a mutual matching field corresponding to the vertex 4 is M4. It is assumed that a target vertex in the directed closed loop is the vertex 4, and a vertex-removed directed graph is obtained by removing the vertex 4. The vertex-removed directed graph includes vertices 1, 2, and 3, and the vertex 4 is placed at the end of the vertex-removed directed graph, to obtain a corrected topological order that is of the vertices and that is shown in the right figure. It is determined, based on the corrected topological order of the vertices, that an order of the four mutual matching fields during restoration of the second program file is {M3, M2, M1, M4}, that is, the operation sequence is C={M3, M2, M1, M4}.

In a third manner, the directed graph includes at least one directed closed loop. In this case, a target edge in each of the at least one directed closed loop is removed, to obtain an edge-removed directed graph, where the target edge is an outgoing edge of a vertex corresponding to a first mutual matching field and is an incoming edge of a vertex corresponding to a second mutual matching field, and the first mutual matching field and the second mutual matching field are two of the plurality of mutual matching fields. The operation sequence is determined based on a topological order of vertices in the edge-removed directed graph, where the operation sequence indicates an order of the plurality of mutual matching fields during restoration of the second program file.

The directed graph includes the at least one directed closed loop, and the target edge in each of the at least one directed closed loop needs to be removed, to obtain the edge-removed directed graph. That is, a target edge is determined from a plurality of edges included in any one of the at least one directed closed loop, the target edge in the directed closed loop is removed, and a target edge in another directed closed loop in the at least one directed closed loop is removed in the same manner, to obtain an edge-removed directed graph.

According to the foregoing content, each of the at least one directed closed loop includes the target edge, and the target edge is the outgoing edge of the vertex corresponding to the first mutual matching field and is the incoming edge of the vertex corresponding to the second mutual matching field. The edge-removed directed graph still includes a plurality of vertices. Because the vertices one-to-one correspond to the mutual matching fields, a topological order of the vertices in the edge-removed directed graph is directly determined as an order of the plurality of mutual matching fields during restoration of the second program file, to obtain the operation sequence. That is, the operation sequence indicates an order of all of the plurality of mutual matching fields during restoration of the second program file.

The target edge in each directed closed loop is determined according to any related algorithm of an in-degree and out-degree greedy method, a greedy randomized adaptive algorithm, a dynamic programming algorithm, and a Cartesian algorithm, provided that a size of a subsequently generated differential package is minimized.

For example, FIG. 9 is still another diagram of performing loop removal on a directed graph according to an embodiment of this application. In the left figure of FIG. 9, a directed graph includes one directed closed loop, and the directed graph includes four vertices 1, 2, 3, and 4. A mutual matching field corresponding to the vertex 1 is M1, a mutual matching field corresponding to the vertex 2 is M2, a mutual matching field corresponding to the vertex 3 is M3, and a mutual matching field corresponding to the vertex 4 is M4. It is assumed that a target edge in the directed closed loop is a directed edge between the vertex 2 and the vertex 4, and an edge-removed directed graph obtained by removing the target edge is shown in the right figure. It is determined, based on a topological order of vertices in the edge-removed directed graph, that an order of the four mutual matching fields during restoration of the second program file is {M4, M3, M2, M1}, that is, the operation sequence is C={M4, M3, M2, M1}.

It should be noted that, when loop removal is performed on the directed graph in the foregoing three manners, there is no need to consider how many directed subgraphs are included in the directed graph and have directed closed loops. In other words, there is no need to consider whether the directed graph includes a plurality of areas connected through an edge, and each area has a directed closed loop. Instead, after the directed graph is determined based on the plurality of mutual matching fields, when the directed graph includes the directed closed loop, loop removal is directly performed on the directed graph in any one of the foregoing three manners. In actual application, when the directed graph includes a plurality of directed subgraphs having directed closed loops, if loop removal is directly performed on the directed graph in any one of the foregoing three manners, efficiency of loop removal on the directed graph is affected. Therefore, in some other embodiments, to improve efficiency of loop removal on the directed graph, the directed graph is first partitioned into a plurality of directed subgraphs, and then loop removal is performed on each directed subgraph. That is, when the directed graph includes one directed subgraph having a directed closed loop, loop removal is performed on the directed subgraph in any one of the foregoing three manners, to obtain one operation sequence. When the directed graph includes a plurality of directed subgraphs having directed closed loops, an edge between the plurality of directed subgraphs is first removed, and then loop removal is performed on each of the plurality of directed subgraphs in any one of the foregoing three manners, to obtain a plurality of operation sequences, where the plurality of operation sequences one-to-one correspond to the plurality of directed subgraphs.

Certainly, in actual application, after the edge between the plurality of directed subgraphs is removed in the foregoing third manner, a partition cost of partitioning the directed graph into the plurality of directed subgraphs further needs to be determined according to a related algorithm. The partition cost increases with a quantity of partitions. Because of defects of hardware settings of the server, the quantity of partitions should not be excessively large. Generally, a directed graph is partitioned into two to five directed subgraphs.

For example, FIG. 10 is yet another diagram of performing loop removal on a directed graph according to an embodiment of this application. In FIG. 10, a directed graph includes a directed subgraph 1 having directed closed loops and a directed subgraph 2 having directed closed loops. Both the directed subgraph 1 and the directed subgraph 2 include two directed closed loops. When loop removal is performed on the directed graph, an edge between the two directed subgraphs is first removed, and then loop removal is performed on each of the two directed subgraphs in any one of the foregoing three manners.

Certainly, in actual application, a directed graph may not include a directed closed loop. In this case, there is no need to perform loop removal on the directed graph, and a topological order of vertices in the directed graph is directly determined as an operation sequence.

It should be noted that the operation sequence includes identifiers corresponding to mutual matching fields, but not the mutual matching fields. In this way, a data amount of the operation sequence can be reduced, and a size of a subsequently generated differential package can be reduced. Certainly, in some cases, the operation sequence may alternatively include mutual matching fields. This is not limited in embodiments of this application.

Step 503: Generate a differential package based on the matching sequence, the operation sequence, and the non-matching data stream, where the differential package indicates a difference between the first program file and the second program file.

In the foregoing step 502, loop removal is performed on the directed graph in different manners to obtain the operation sequence, and operation sequences obtained in different loop removal manners are also different. Therefore, processes of generating the differential package based on the matching sequence, the operation sequence, and the non-matching data stream are also different. The following separately describes the following three cases.

In a first case, loop removal is performed on the directed graph in the first manner to obtain the operation sequence. In this case, a character string that is indicated by a target mutual matching field and that is in the first program file is added to the non-matching data stream, to obtain an updated non-matching data stream. The target mutual matching field in the matching sequence is converted into a non-matching field, to obtain an updated matching sequence. The differential package is generated based on the updated matching sequence, the operation sequence, and the updated non-matching data stream.

In other words, when the directed graph includes at least one directed closed loop, a target mutual matching field corresponding to a target vertex in each directed closed loop is converted into a non-matching field, to obtain the updated matching sequence. Then, the character string that is indicated by the target mutual matching field and that is in the first program file is added to the non-matching data stream to obtain the updated non-matching data stream, and the updated matching sequence, the operation sequence, and the updated non-matching data stream are encoded according to a related algorithm to obtain the differential package.

Based on the foregoing description, a mutual matching field indicates that a character string in the second program file is the same as a character string in the first program file, and a non-matching field indicates that a character string in the second program file is the same as a character string in the non-matching data stream. Therefore, in a process of converting the target mutual matching field into the non-matching field, the character string that is indicated by the target mutual matching field and that is in the first program file is directly added to the non-matching data stream.

For example, FIG. 7 is used as an example. A target vertex in a directed closed loop is a vertex 4, and a mutual matching field corresponding to the vertex 4 is M4. After the vertex 4 is removed, a character string *S*[*p*4 *- d*4, *p*4 - *d*4 *+ l*4) that is indicated by the mutual matching field M4 and that is in the first program file is added to the non-matching data stream, and the mutual matching field M4 in the matching sequence is converted into a non-matching field.

In a second case, loop removal is performed on the directed graph in the second manner to obtain the operation sequence. In this case, a first identifier is added to a target mutual matching field in the matching sequence, to obtain an updated matching sequence, where the first identifier indicates that an operation manner corresponding to the target mutual matching field is a first-type shelving operation. The differential package is generated based on the updated matching sequence, the operation sequence, and the non-matching data stream.

To be specific, in a process of performing loop removal on the directed graph in the foregoing second manner, a target vertex in each directed closed loop is placed at the end of another vertex in each directed closed loop. This changes an order of the plurality of mutual matching fields during restoration of the second program file, but does not remove the target mutual matching field in the matching sequence. Then, the updated matching sequence, the operation sequence, and the non-matching data stream are encoded according to a related algorithm to obtain the differential package.

The first-type shelving operation means that a character string that is indicated by the target mutual matching field and that is in the first program file is not moved temporarily, but character strings that are indicated by other mutual matching fields and that are in the first program file are first moved in an order that is of the other mutual matching fields and that is indicated by the operation sequence. Then, the character string that is indicated by the target mutual matching field and that is in the first program file is moved. The other mutual matching fields and the target mutual matching field belong to a same operation sequence, that is, vertices corresponding to the other mutual matching fields and a vertex corresponding to the target mutual matching field belong to a same directed subgraph.

Optionally, after loop removal is performed on the directed graph in the second manner, a third identifier can be further added to another mutual matching field other than the target mutual matching field in the matching sequence, where the third identifier indicates that an operation manner corresponding to the another mutual matching field is a non-shelving operation.

The first identifier and the third identifier are preset. For example, the first identifier is stash-short, and the third identifier is normal. In addition, the first identifier and the third identifier may be adjusted based on different requirements.

For example, FIG. 8 is used as an example. A target vertex in a directed closed loop is a vertex 4, and a mutual matching field corresponding to the vertex 4 is M4. After the vertex 4 is removed, the first identifier is added to the mutual matching field M4 in the matching sequence.

In a third case, loop removal is performed on the directed graph in the third manner to obtain the operation sequence. In this case, a second identifier is added to a first mutual matching field in the matching sequence, to obtain an updated matching sequence, where the second identifier indicates that an operation manner corresponding to the first mutual matching field is a second-type shelving operation. The differential package is generated based on the updated matching sequence, the operation sequence, and the non-matching data stream.

To be specific, in a process of performing loop removal on the directed graph in the foregoing third manner, only an execution order of the first mutual matching field during restoration of the second program file is changed, and the first mutual matching field in the matching sequence is not removed. Then, the updated matching sequence, the operation sequence, and the non-matching data stream are encoded according to a related algorithm to obtain the differential package.

The second-type shelving operation means that an overlapping character string that is connected to a target edge and that is between a character string that is indicated by the first mutual matching field and that is in the first program file and a character string that is indicated by a second mutual matching field and that is in the second program file is not moved temporarily, but other character strings that are indicated by mutual matching fields and that are in the first program file are first moved in an order that is of the mutual matching fields and that is indicated by the same operation sequence. Then, the overlapping character string in the first program file is moved.

The second identifier is preset. For example, the second identifier is stash-long. In addition, the second identifier may be adjusted based on different requirements.

For example, FIG. 9 is used as an example. A target edge in a directed closed loop is a directed edge between a vertex 2 and a vertex 4. The target edge is an outgoing edge of the vertex 2 corresponding to a first mutual matching field M2 and is an incoming edge of the vertex 4 corresponding to a second mutual matching field M4. After the target edge is removed, the second identifier is added to the first mutual matching field M2 in the matching sequence.

It should be noted that, when the directed graph includes a directed closed loop, an order of matching fields in an updated matching sequence obtained by performing loop removal on the directed graph may be different from an order of matching fields in the matching sequence determined based on the first program file and the second program file in step 501. To facilitate subsequent movement, by the intelligent terminal based on the operation sequence, of a character string that is indicated by a matching field included in the updated matching sequence and that is in the first program file, a start location of a character string that is indicated by each matching field in the updated matching sequence and that is in the second program file further needs to be determined according to a related algorithm. That is, each matching field is converted from a triplet into a four-tuple, each matching field includes a matching type, a matching distance, a quantity of matched bytes, and a matching location, and the matching location is a start location of a character string that is indicated by a matching field and that is in the second program file.

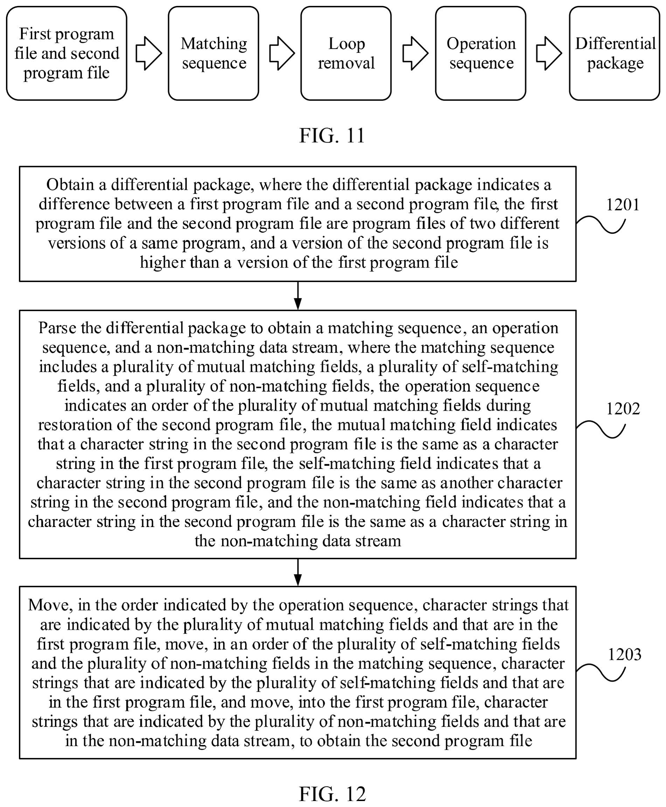

For example, FIG. 11 is a flowchart of a differential process according to an embodiment of this application. In FIG. 11, a server determines a matching sequence based on a first program file and a second program file, determines a directed graph based on a plurality of mutual matching fields included in the matching sequence, and when the directed graph includes a directed closed loop, performs loop removal on the directed graph to obtain an operation sequence. Further, the server encodes the matching sequence, the operation sequence, and a non-matching data stream to generate a differential package.

In embodiments of this application, a packaging tool on the server is improved, so that a same character string in program files of different versions of a same program is determined based on the program files of different versions, to obtain the matching sequence that includes the plurality of mutual matching fields, the plurality of self-matching fields, and the plurality of non-matching fields, and the operation sequence that indicates an execution order of the mutual matching fields. The matching sequence, the operation sequence, and the non-matching data stream are encoded, so that the differential package can be generated more quickly, and a faster and more traffic-saving program update can be implemented. In addition, embodiments of this application further provide a plurality of manners of performing loop removal on the directed graph, and different loop removal manners correspond to different sizes of the differential package and different occupation requirements of space of the hard disk of the intelligent terminal. Therefore, the server can select different loop removal manners based on a size of available space of the hard disk of the intelligent terminal, that is, a surplus degree of a swap area, to resolve the conflict caused by character string movement.

Then, the restoration process is described in detail. FIG. 12 is a flowchart of another program update method according to an embodiment of this application. The method is applied to an intelligent terminal. Refer to FIG. 12. The method includes the following steps.

Step 1201: Obtain a differential package, where the differential package indicates a difference between a first program file and a second program file, the first program file and the second program file are program files of two different versions of a same program, and a version of the second program file is higher than a version of the first program file.

In some embodiments, the intelligent terminal sends a program update request to a server, where the program update request carries a program identifier. The server receives the program update request sent by the intelligent terminal, obtains, based on the program identifier, the differential package from a stored correspondence between the program identifier and the differential package, and further sends the differential package to the intelligent terminal.

The program identifier uniquely identifies a current to-be-updated program. The program identifier may be a number, a name, a type, a model, or the like of the program, or may be obtained by combining the foregoing information.

Optionally, the program update request may further carry other information, for example, a version number of the first program file. This is not limited in embodiments of this application. The current to-be-updated program may have program files of different versions, and the server stores differential packages respectively corresponding to the program files of different versions. Therefore, when the program update request sent by the intelligent terminal carries the version number of the first program file, after the server receives the program update request sent by the intelligent terminal, the server obtains, based on the version number of the first program file, a differential package from a stored correspondence between a version number and a differential package, and then, sends the differential package to the intelligent terminal.

In some other embodiments, after generating the differential package based on the first program file and the second program file according to the foregoing steps 501 to 503, the server can directly send the differential package to the intelligent terminal, so that the intelligent terminal obtains the differential package and updates a program.

Step 1202: Parse the differential package to obtain a matching sequence, an operation sequence, and a non-matching data stream, where the matching sequence includes a plurality of mutual matching fields, a plurality of self-matching fields, and a plurality of non-matching fields, the operation sequence indicates an order of the plurality of mutual matching fields during restoration of the second program file, the mutual matching field indicates that a character string in the second program file is the same as a character string in the first program file, the self-matching field indicates that a character string in the second program file is the same as another character string in the second program file, and the non-matching field indicates that a character string in the second program file is the same as a character string in the non-matching data stream.

After obtaining the differential package, the intelligent terminal parses the differential package according to a related algorithm, to obtain the matching sequence, the operation sequence, and the non-matching data stream. The matching sequence obtained by the intelligent terminal by parsing the differential package is not the matching sequence determined by the server based on the first program file and the second program file according to the foregoing step 501, but is an updated matching sequence obtained by the server by performing loop removal on a directed graph. In other words, the server first determines an initial matching sequence based on the first program file and the second program file, and updates the initial matching sequence in a process in which the server performs loop removal on the directed graph, to obtain the updated matching sequence. The updated matching sequence includes a plurality of mutual matching fields, and the plurality of mutual matching fields are some or all of a plurality of mutual matching fields included in the initial matching sequence.

Step 1203: Move, in the order indicated by the operation sequence, character strings that are indicated by the plurality of mutual matching fields and that are in the first program file, move, in an order of the plurality of self-matching fields and the plurality of non-matching fields in the matching sequence, character strings that are indicated by the plurality of self-matching fields and that are in the first program file, and move, into the first program file, character strings that are indicated by the plurality of non-matching fields and that are in the non-matching data stream, to obtain the second program file.

The intelligent terminal first moves, in the order that is of the plurality of mutual matching fields and that is indicated by the operation sequence, the character strings that are indicated by the plurality of mutual matching fields and that are in the first program file, that is, performs an operation on the plurality of mutual matching fields. Then, the intelligent terminal moves, in the order that is of the plurality of self-matching fields and the plurality of non-matching fields and that is indicated by the matching sequence, the character strings that are indicated by the plurality of self-matching fields and the plurality of non-matching fields and that are in the first program file, that is, performs an operation on the plurality of self-matching fields and the plurality of non-matching fields, to obtain a complete second program file. In other words, the intelligent terminal directly restores the second program file in a complete and non-overlapping manner based on the first program file by using the plurality of mutual matching fields, the plurality of self-matching fields, and the plurality of non-matching fields, and does not need to first generate a complete second program file and then replace the first program file with the second program file, so that occupation of space of a hard disk of the intelligent terminal is reduced, and program update efficiency is improved.

Based on the foregoing description, in a process of performing loop removal on the directed graph, an operation manner corresponding to a target mutual matching field corresponding to a target vertex is converted into a first-type shelving operation, or an operation manner corresponding to a first mutual matching field corresponding to a target edge is converted into a second-type shelving operation. In different cases, manners of moving, in the order indicated by the operation sequence, the character strings that are indicated by the plurality of mutual matching fields and that are in the first program file are different. Therefore, the following separately describes the two cases.

In a first case, the operation manner corresponding to the target mutual matching field corresponding to the target vertex is converted into the first-type shelving operation. A mutual matching field is selected from the plurality of mutual matching fields in the order indicated by the operation sequence. When the selected mutual matching field does not include a first identifier, a character string that is indicated by the selected mutual matching field and that is in the first program file is moved. Alternatively, when the selected mutual matching field includes a first identifier, a character string indicated by the selected mutual matching field is obtained from a target location, and the obtained character string is moved into the first program file, where the first identifier indicates that an operation manner corresponding to the selected mutual matching field is the first-type shelving operation.

When the selected mutual matching field does not include the first identifier, it indicates that an operation manner corresponding to the selected mutual matching field is a non-shelving operation. In this case, the character string that is indicated by the selected mutual matching field and that is in the first program file is moved to a matching location included in the selected mutual matching field. When the selected mutual matching field includes the first identifier, it indicates that an operation manner corresponding to the selected mutual matching field is the first-type shelving operation. In this case, the character string that is indicated by the selected mutual matching field and that is in the first program file is obtained from a target location based on the identifier of the selected mutual matching field. Then, the obtained character string is moved to the matching location included in the selected mutual matching field.

The target location may be an idle area of a hard disk of the intelligent terminal or another external storage device. To be specific, before the intelligent terminal moves, in the order indicated by the operation sequence, the character strings that are indicated by the plurality of mutual matching fields and that are in the first program file, the intelligent terminal further needs to move, to the idle area of the hard disk or the another external storage device, character strings that are indicated by mutual matching fields whose operation manners are the first-type shelving operation and the second-type shelving operation and that are in the first program file. In this way, character strings indicated by mutual matching fields can avoid being overwritten, thereby preventing a conflict caused by character string movement. For example, when a first mutual matching field includes the first identifier, a character string that is indicated by the first mutual matching field and that is in the first program file is obtained, and the character string indicated by the first mutual matching field is stored in the target location, where the first mutual matching field is any one of the plurality of mutual matching fields. Alternatively, when the first mutual matching field includes a second identifier, an overlapping character string between a character string that is indicated by the first mutual matching field and that is in the first program file and a character string that is indicated by a second mutual matching field and that is in the second program file is obtained, and the overlapping character string is stored in a target location, where the first mutual matching field is restored earlier than the second mutual matching field during restoration of the second program file.

It should be noted that, to avoid a conflict caused by movement of the character strings indicated by the mutual matching fields, before the intelligent terminal moves, in the order indicated by the operation sequence, the character strings that are indicated by the plurality of mutual matching fields and that are in the first program file, the intelligent terminal moves, to the idle area of the hard disk or the another external storage device, the character strings indicated by the mutual matching fields whose operation manners are the first-type shelving operation and the second-type shelving operation. This is merely an example. In some other embodiments, in a process of moving the character strings that are indicated by the plurality of mutual matching fields and that are in the first program file, the intelligent terminal can further parse, from the differential package in real time, the character strings indicated by the mutual matching fields whose operation manners are the first-type shelving operation and the second-type shelving operation. In other words, after determining, according to the foregoing step 503, operation manners corresponding to the mutual matching fields, the server compiles, into the differential package, the character strings indicated by the mutual matching fields whose operation manners are the first-type shelving operation and the second-type shelving operation. In this way, after receiving the differential package sent by the server, the intelligent terminal can directly parse, from the differential package, the character strings indicated by the mutual matching fields whose operation manners are the first-type shelving operation and the second-type shelving operation.

For example, FIG. 8 is used as an example. It is assumed that the operation sequence is C={M3, M2, M1, M4}, and character strings that are indicated by mutual matching fields M3, M2, M1, and M4 and that are in the first program file are sequentially moved in the order indicated by the operation sequence. Because the mutual matching field M4 includes the first identifier, a character string *S*[*p*4 *- d*4*, p*4 *- d*4 *+l*4) that is indicated by the mutual matching field M4 and that is in the first program file is obtained from the target location. A matching location included in the mutual matching field M4 is *p*4 . Therefore, the obtained character string *S*[*p*4*-d*4*,p*4*-d*4*+l*4) is moved to *p*4.

In a second case, the operation manner corresponding to the first mutual matching field corresponding to the target edge is converted into the second-type shelving operation. A mutual matching field is selected from the plurality of mutual matching fields in the order indicated by the operation sequence. When the selected mutual matching field does not include a second identifier, a character string that is indicated by the selected mutual matching field and that is in the first program file is moved. Alternatively, when the selected mutual matching field includes a second identifier, a movable character string is determined based on a character string that is indicated by the selected mutual matching field and that is in the first program file and an overlapping character string that corresponds to the selected mutual matching field and that is stored in a target location, and the movable character string in the first program file is moved, where the second identifier indicates that an operation manner corresponding to the selected mutual matching field is the second-type shelving operation. When the selected mutual matching field is a last mutual matching field in the plurality of mutual matching fields, after the movable character string is moved, the overlapping character string is moved into the first program file to be concatenated with the movable character string.

When the selected mutual matching field does not include the second identifier, it indicates that an operation manner corresponding to the selected mutual matching field is a non-shelving operation. In this case, the character string that is indicated by the selected mutual matching field and that is in the first program file is moved to a matching location included in the selected mutual matching field. When the selected mutual matching field includes the second identifier, it indicates that an operation manner corresponding to the selected mutual matching field is the second-type shelving operation. In this case, the overlapping character string that is indicated by the selected mutual matching field and that is in the first program file is obtained from the target location based on the identifier of the selected mutual matching field. Then, the movable character string is determined according to a related algorithm based on a character string that is indicated by the selected mutual matching field and that is in the first program file and the overlapping character string indicated by the selected mutual matching field, and the movable character string is moved to the matching location included in the selected mutual matching field. If the selected mutual matching field is the last mutual matching field in the plurality of mutual matching fields, after the movable character string is moved, the overlapping character string indicated by the selected mutual matching field is moved into the first program file, and the overlapping character string and the movable character string are concatenated. If the selected mutual matching field is not the last mutual matching field in the plurality of mutual matching fields, after the movable character string is moved, a next mutual matching field continues to be selected in the order indicated by the operation sequence, and further, a character string that is indicated by the next mutual matching field and that is in the first program file is moved until the selected mutual matching field is the last mutual matching field in the operation sequence.

For example, FIG. 9 is used as an example. It is assumed that the operation sequence is C={M4, M3, M2, M1}, and character strings that are indicated by mutual matching fields M4, M3, M2, and M1 and that are in the first program file are sequentially moved in the order indicated by the operation sequence. Because the mutual matching field M2 includes the second identifier, an overlapping character string *S*[*p*2*'-d*2*',p*2*' - d*2*'+l*2') that is indicated by the mutual matching field M2 and that is in the first program file is obtained from the target location. A movable character string *S*[*p*2*"-d*2*",p*2*"-d*2*"+l*2") is determined based on the character string *S*[*p*2 *- d*2*, p*2 *- d*2 *+ l*2) that is indicated by the mutual matching field M2 and that is in the first program file and the overlapping character string *S*[*p*2*' - d*2*', p*2*' -d*2*' + l*2'), and further, the movable character string *S*[*p*2*"-d*2*",p*2*"-d*2"*+l*2*"*) is moved to a matching location *p*2 included in the mutual matching field M2. Because the mutual matching field M2 is not a last mutual matching field in the operation sequence, after the movable character string *S*[*p*2*"-d*2*",p*2*"-d*2*"+l*2*"*) is moved to the matching location *p*2 included in the mutual matching field M2, a character string that is indicated by the mutual matching field M1 and that is in the first program file continues to be moved. After the character string that is indicated by the mutual matching field M1 and that is in the first program file is moved, the overlapping character string *S*[*p*2*'-d*2*',p*2*' -d*2*' +l*2') is moved to a matching location *p*4 included in the mutual matching field M4, and the overlapping character string *S*[*p*2*'-d*2*', p*2*' -d*2*' +l2*') and the moved movable character string are concatenated.

After the character strings that are indicated by the plurality of mutual matching fields and that are in the first program file are moved in the order indicated by the operation sequence, the character strings that are indicated by the plurality of self-matching fields and that are in the first program file need to be moved in the order of the plurality of self-matching fields and the plurality of non-matching fields in the matching sequence, and the character strings that are indicated by the plurality of non-matching fields and that are in the non-matching data stream are moved into the first program file, to obtain the second program file.

In some embodiments, a matching field is selected from the matching sequence in the order that is of the plurality of self-matching fields and the plurality of non-matching fields and that is indicated by the matching sequence. When the selected matching field is a self-matching field, a character string that is indicated by the selected matching field and that is in the first program file is moved to a matching location included in the selected self-matching field. When the selected matching field is a non-matching field, a character string indicated by the selected matching field is obtained from the non-matching data stream, the obtained character string is moved to a matching location included in the selected non-matching field, and the plurality of self-matching fields and the plurality of non-matching fields are sequentially traversed in the same manner, to obtain the second program file.

It should be noted that the foregoing content is described by using an example in which each matching field in the matching sequence is a four-tuple, that is, each matching field includes a matching type, a matching distance, a quantity of matched bytes, and a matching location. Therefore, in a process of moving a character string that is indicated by each matching field and that is in the first program file, the character string indicated by each matching field is moved to a matching location included in a corresponding matching field. Certainly, in actual application, each matching field in the matching sequence may be a triplet, that is, each matching field includes a matching type, a matching distance, and a quantity of matched bytes. In this case, in a process of moving a character string that is indicated by any matching field and that is in the first program file, matching fields whose sequence numbers are located before a sequence number of the matching field need to be first determined based on the sequence number of the matching field, a sum of quantities of matched bytes of all the matching fields is determined as a target location of the matching field, and then the character string indicated by the matching field is moved to the target location of the matching field.

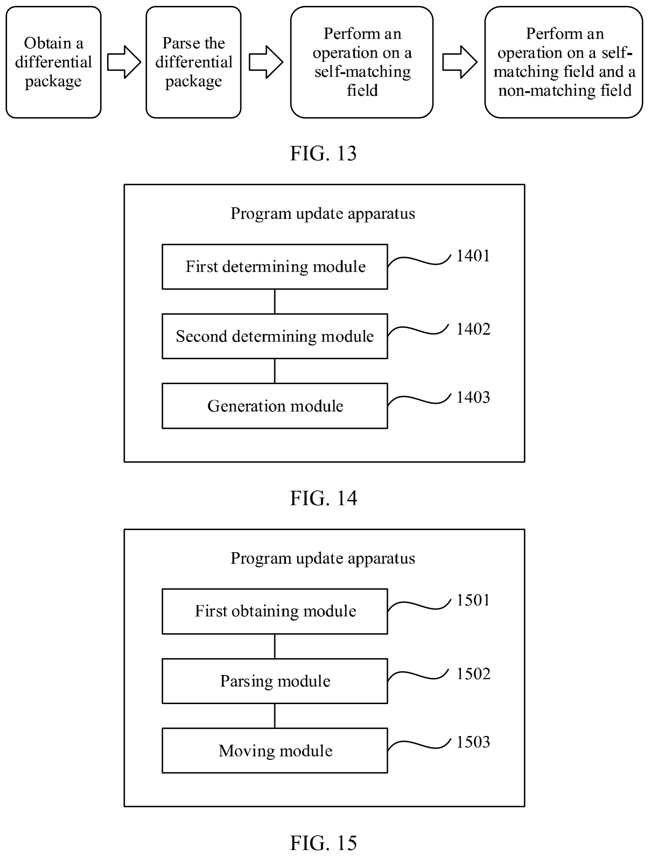

For example, FIG. 13 is a flowchart of a restoration process according to an embodiment of this application. In FIG. 13, an intelligent terminal obtains a differential package, and parses the differential package to obtain a matching sequence, an operation sequence, and a non-matching data stream. The matching sequence includes a plurality of mutual matching fields, a plurality of self-matching fields, and a plurality of non-matching fields. The intelligent terminal first moves, in an order that is of the plurality of mutual matching fields and that is indicated by the operation sequence, character strings that are indicated by the plurality of mutual matching fields and that are in a first program file, that is, performs an operation on the plurality of mutual matching fields. Then, the intelligent terminal moves, in an order that is of the plurality of self-matching fields and the plurality of non-matching fields and that is indicated by the matching sequence, character strings that are indicated by the plurality of self-matching fields and the plurality of non-matching fields and that are in the first program file, that is, performs an operation on the plurality of self-matching fields and the plurality of non-matching fields, to obtain a complete second program file.

It should be noted that, for different types of programs, the program update method provided in embodiments of this application achieves excellent effect. For example, for three different types of programs, experimental results obtained according to the program update method provided in embodiments of this application are shown in Table 1. Table 1 includes a first program file and a second program file that are separately corresponding to each of three different types of programs, and first program files and second program files that correspond to the three programs are all Android application package (android application package, APK) types.

A program 1 is used as an example. A size of a first program file corresponding to the program 1 is 219 megabytes (MB), and a size of a second program file corresponding to the program 1 is 220 MB. If a complete second program file is first generated by using a related technology, and then the first program file is replaced with the second program file to update the program 1, 220 MB space of a hard disk of an intelligent terminal needs to be occupied. If loop removal is performed in the first manner provided in embodiments of this application, a target mutual matching field is converted into a non-matching field. In this case, a size of a differential package generated by a server is 40774 kilobytes (KB), and space of the hard disk of the intelligent terminal does not need to be occupied during a program update. If loop removal is performed in the second manner provided in embodiments of this application, an operation manner corresponding to the target mutual matching field is converted into a first-type shelving operation. In this case, a size of the differential package generated by the server is 34033 KB. In comparison with a case in which the target mutual matching field is directly converted into the non-matching field, the size of the differential package is reduced by 6741 KB, and 9612 KB space of the hard disk of the intelligent terminal needs to be occupied during a program update, thereby balancing the differential package and the space of the hard disk.

According to the method provided in embodiments of this application, two directed subgraphs are first obtained through partitioning, and then an operation manner corresponding to a target mutual matching field in each directed subgraph is converted into the first-type shelving operation. In this case, a size of the differential package generated by the server is 34520 KB, and 6710 KB space of the hard disk of the intelligent terminal needs to be occupied during a program update. Compared with a case in which the operation manner corresponding to the target mutual matching field is directly converted into the first-type shelving operation, this manner reduces occupied space of the hard disk by 2902 KB. It can be learned that a requirement for occupying space of the hard disk can be greatly reduced by first partitioning the directed graph into a plurality of directed subgraphs and then performing loop removal on each directed subgraph.

After the directed graph is partitioned into two directed subgraphs, an overlapping character string corresponding to an edge between the two directed subgraphs is first placed in an idle area of the hard disk. A character string that is indicated by a target mutual matching field and that is in a first directed subgraph in the two directed subgraphs is placed in the idle area of the hard disk. A character string in the first program file is moved in an order of the mutual matching field indicated by a first operation sequence corresponding to the first directed subgraph. After the character string in the first program file is moved in the order of the mutual matching field indicated by the first operation sequence, space that is of the hard disk and that is occupied by the character string that is indicated by the target mutual matching field and that is in the first directed subgraph is immediately released, and further, a character string that is indicated by a target mutual matching field and that is in a second directed subgraph is placed in the idle area of the hard disk. Then, the character string in the first program file is moved in an order of a mutual matching field indicated by a second operation sequence corresponding to the second directed subgraph. Finally, the overlapping character string corresponding to the edge between the two directed subgraphs is moved into the first program file, to obtain the second program file.

To be specific, in a process of moving a character string indicated by a mutual matching field included in the matching sequence, the overlapping character string corresponding to the edge between the two directed subgraphs is always placed in the idle area of the hard disk. In addition, the first directed subgraph and the second directed subgraph jointly occupy same space of the hard disk. To meet both a first occupation requirement of the character string that is indicated by the target mutual matching field and that is in the first directed subgraph and a second occupation requirement of the character string that is indicated by the target mutual matching field and that is in the second directed subgraph, a size of available space of the hard disk of the intelligent terminal needs to be at least equal to a maximum value in the first occupation requirement and the second occupation requirement.

According to the method provided in embodiments of this application, four directed subgraphs are first obtained through partitioning, and then an operation manner corresponding to a target mutual matching field in each directed subgraph is converted into the first-type shelving operation. In this case, a size of the differential package generated by the server is 35561 KB, and 4505 KB space of the hard disk of the intelligent terminal needs to be occupied during a program update. Compared with a case in which the operation manner corresponding to the target mutual matching field is directly converted into the first-type shelving operation, this manner reduces occupied space of the hard disk by 5107 KB.

**Table 1**

| First program file | Second program file | Conversion into a non-matching field | | Conversion into a first-type shelving operation | | Partition into two directed subgraphs and conversion into the first-type shelving operation | | Partition into four directed subgraphs and conversion into the first-type shelving operation | |
|---|---|---|---|---|---|---|---|---|---|
| | | Differential package | Space of a hard disk | Differential package | Space of a hard disk | Differential package | Space of a hard disk | Differential package | Space of a hard disk |
| apk 1 (219) | apk 1 (220) | 40774 | 0 | 34033 | 9612 | 34520 | 6710 | 35561 | 4505 |
| apk 2 (285) | apk 2 (274) | 48465 | 0 | 43892 | 6714 | 44059 | 4970 | 44267 | 2797 |
| apk 3 (158) | apk 3 (135) | 43426 | 0 | 33115 | 13140 | 33615 | 8861 | 34003 | 5733 |

In embodiments of this application, a restoration tool on the intelligent terminal is improved, so that the character strings that are indicated by the plurality of mutual matching fields and that are in the first program file are first moved in the order indicated by the operation sequence, and then the character strings that are indicated by the plurality of self-matching fields and the plurality of non-matching fields and that are in the first program file are moved in the order that is of the plurality of self-matching fields and the plurality of non-matching fields and that is indicated by the matching sequence. In this way, the second program file can be directly restored in a complete and non-overlapping manner based on the first program file by using the plurality of mutual matching fields, the plurality of self-matching fields, and the plurality of non-matching fields. In comparison with a related technology in which a complete second program file is first generated and then the first program file is replaced with the second program file, in embodiments of this application, the second program file can be directly obtained by moving and modifying a character string in the first program file. That is, the second program file is obtained by moving the character string in the first program file and filling the non-matching data stream, so that occupation of space of the hard disk of the intelligent terminal can be reduced, and program update efficiency can be improved.

FIG. 14 is a diagram of a structure of a program update apparatus according to an embodiment of this application. The program update apparatus may be implemented as a part or all of a server by using software, hardware, or a combination thereof. Refer to FIG. 14. The apparatus includes a first determining module 1401, a second determining module 1402, and a generation module 1403.

The first determining module 1401 is configured to determine a matching sequence based on a first program file and a second program file, where the matching sequence includes a plurality of mutual matching fields, a plurality of self-matching fields, and a plurality of non-matching fields. For a detailed implementation process, refer to corresponding content in the foregoing embodiments. Details are not described herein again.

The mutual matching field indicates that a character string in the second program file is the same as a character string in the first program file, the self-matching field indicates that a character string in the second program file is the same as another character string in the second program file, the non-matching field indicates that a character string in the second program file is the same as a character string in a non-matching data stream, the first program file and the second program file are program files of two different versions of a same program, and a version of the second program file is higher than a version of the first program file.

The second determining module 1402 is configured to determine an operation sequence based on the plurality of mutual matching fields, where the operation sequence indicates an order of some or all of the plurality of mutual matching fields during restoration of the second program file, and when the second program file is restored in the order indicated by the operation sequence, character strings indicated by the plurality of mutual matching fields do not overlap. For a detailed implementation process, refer to corresponding content in the foregoing embodiments. Details are not described herein again.

The generation module 1403 is configured to generate a differential package based on the matching sequence, the operation sequence, and the non-matching data stream, where the differential package indicates a difference between the first program file and the second program file. For a detailed implementation process, refer to corresponding content in the foregoing embodiments. Details are not described herein again.

Optionally, the second determining module 1402 includes:
a directed graph unit, configured to determine a directed graph based on the plurality of mutual matching fields, where the directed graph indicates a topological order of the plurality of mutual matching fields; and
a loop removal unit, configured to: when the directed graph includes a directed closed loop, perform loop removal on the directed graph to obtain the operation sequence.

Optionally, the directed graph includes at least one directed closed loop, the directed graph includes a plurality of vertices, and the plurality of vertices one-to-one correspond to the plurality of mutual matching fields.

The loop removal unit is specifically configured to:
remove a target vertex in each of the at least one directed closed loop, to obtain a vertex-removed directed graph, where the target vertex is a vertex in the directed closed loop; and
determine the operation sequence based on a topological order of vertices in the vertex-removed directed graph, where the operation sequence indicates an order of mutual matching fields in the plurality of mutual matching fields other than a target mutual matching field during restoration of the second program file, and the target mutual matching field is a mutual matching field corresponding to the target vertex.

Optionally, the generation module 1403 is specifically configured to:
add, to the non-matching data stream, a character string that is indicated by the target mutual matching field and that is in the first program file is added, to obtain an updated non-matching data stream;
convert, the target mutual matching field in the matching sequence into a non-matching field, to obtain an updated matching sequence; and
generate the differential package based on the updated matching sequence, the operation sequence, and the updated non-matching data stream.

Optionally, the directed graph includes at least one directed closed loop, the directed graph includes a plurality of vertices, and the plurality of vertices one-to-one correspond to the plurality of mutual matching fields.

The loop removal unit is specifically configured to:
remove a target vertex in each of the at least one directed closed loop, to obtain a vertex-removed directed graph, where the target vertex is a vertex in the directed closed loop;
place the target vertex at the end of the vertex-removed directed graph, to obtain a corrected topological order of the plurality of vertices; and
determine the operation sequence based on the corrected topological order of the plurality of vertices, where the operation sequence indicates an order of the plurality of mutual matching fields during restoration of the second program file.

Optionally, the generation module 1403 is specifically configured to:
add a first identifier to a target mutual matching field in the matching sequence, to obtain an updated matching sequence, where the first identifier indicates that an operation manner corresponding to the target mutual matching field is a first-type shelving operation, and the target mutual matching field is a mutual matching field corresponding to the target vertex; and
generate the differential package based on the updated matching sequence, the operation sequence, and the non-matching data stream.

Optionally, the directed graph includes at least one directed closed loop, the directed graph includes a plurality of vertices, and the plurality of vertices one-to-one correspond to the plurality of mutual matching fields.

The loop removal unit is specifically configured to:
remove a target edge in each of the at least one directed closed loop, to obtain an edge-removed directed graph, where the target edge is an outgoing edge of a vertex corresponding to a first mutual matching field and is an incoming edge of a vertex corresponding to a second mutual matching field, and the first mutual matching field and the second mutual matching field are two of the plurality of mutual matching fields; and
determine the operation sequence based on a topological order of vertices in the edge-removed directed graph, where the operation sequence indicates an order of the plurality of mutual matching fields during restoration of the second program file.

Optionally, the generation module 1403 is specifically configured to:
add a second identifier to the first mutual matching field in the matching sequence, to obtain an updated matching sequence, where the second identifier indicates that an operation manner corresponding to the first mutual matching field is a second-type shelving operation; and
generate the differential package based on the updated matching sequence, the operation sequence, and the non-matching data stream.

Optionally, the loop removal unit is specifically configured to:
when the directed graph includes one directed subgraph having a directed closed loop, perform loop removal on the directed subgraph to obtain the operation sequence; or
when the directed graph includes a plurality of directed subgraphs having directed closed loops, remove an edge between the plurality of directed subgraphs, and perform loop removal on each of the plurality of directed subgraphs to obtain the operation sequence.

In this embodiment of this application, a packaging tool on the server is improved, so that a same character string in program files of different versions of a same program is determined based on the program files of different versions, to obtain the matching sequence that includes the plurality of mutual matching fields, the plurality of self-matching fields, and the plurality of non-matching fields, and the operation sequence that indicates an execution order of the mutual matching fields. The matching sequence, the operation sequence, and the non-matching data stream are encoded, so that the differential package can be generated more quickly, and a faster and more traffic-saving program update can be implemented. In addition, this embodiment of this application further provides a plurality of manners of performing loop removal on the directed graph, and different loop removal manners correspond to different sizes of the differential package and different occupation requirements of space of a hard disk of an intelligent terminal. Therefore, the server can select different loop removal manners based on a size of available space of the hard disk of the intelligent terminal, that is, a surplus degree of a swap area, to resolve a conflict caused by character string movement.

It should be noted that, when the program update apparatus provided in the foregoing embodiment updates a program, division into the foregoing functional modules is merely used as an example for description. In actual application, the foregoing functions may be allocated to different functional modules for implementation based on a requirement, that is, an internal structure of the apparatus is divided into different functional modules, to complete all or some of the functions described above. In addition, the program update apparatus provided in the foregoing embodiment and the program update method embodiment belong to a same idea. For a specific implementation process, refer to the method embodiment. Details are not described herein again.

FIG. 15 is a diagram of a structure of a program update apparatus according to an embodiment of this application. The program update apparatus may be implemented as a part or all of an intelligent terminal by using software, hardware, or a combination thereof. Refer to FIG. 15. The apparatus includes a first obtaining module 1501, a parsing module 1502, and a moving module 1503.

The first obtaining module 1501 is configured to obtain a differential package, where the differential package indicates a difference between a first program file and a second program file, the first program file and the second program file are program files of two different versions of a same program, and a version of the second program file is higher than a version of the first program file. For a detailed implementation process, refer to corresponding content in the foregoing embodiments. Details are not described herein again.

The parsing module 1502 is configured to parse the differential package to obtain a matching sequence, an operation sequence, and a non-matching data stream, where the matching sequence includes a plurality of mutual matching fields, a plurality of self-matching fields, and a plurality of non-matching fields, the operation sequence indicates an order of the plurality of mutual matching fields during restoration of the second program file, the mutual matching field indicates that a character string in the second program file is the same as a character string in the first program file, the self-matching field indicates that a character string in the second program file is the same as another character string in the second program file, and the non-matching field indicates that a character string in the second program file is the same as a character string in the non-matching data stream. For a detailed implementation process, refer to corresponding content in the foregoing embodiments. Details are not described herein again.

The moving module 1503 is configured to move, in the order indicated by the operation sequence, character strings that are indicated by the plurality of mutual matching fields and that are in the first program file, move, in an order of the plurality of self-matching fields and the plurality of non-matching fields in the matching sequence, character strings that are indicated by the plurality of self-matching fields and that are in the first program file, and move, into the first program file, character strings that are indicated by the plurality of non-matching fields and that are in the non-matching data stream, to obtain the second program file. For a detailed implementation process, refer to corresponding content in the foregoing embodiments. Details are not described herein again.

Optionally, the apparatus further includes:
a second obtaining module, configured to: when a first mutual matching field includes a first identifier, obtain a character string that is indicated by the first mutual matching field and that is in the first program file, and store the character string indicated by the first mutual matching field in a target location, where the first mutual matching field is any one of the plurality of mutual matching fields; or
a third obtaining module, configured to: when the first mutual matching field includes a second identifier, obtain an overlapping character string between a character string that is indicated by the first mutual matching field and that is in the first program file and a character string that is indicated by a second mutual matching field and that is in the second program file, and store the overlapping character string in a target location, where the first mutual matching field is restored earlier than the second mutual matching field during restoration of the second program file.

Optionally, the moving module 1503 is specifically configured to:
select a mutual matching field from the plurality of mutual matching fields in the order indicated by the operation sequence; and
when the selected mutual matching field does not include the first identifier, move a character string that is indicated by the selected mutual matching field and that is in the first program file; or
when the selected mutual matching field includes the first identifier, obtain, from the target location, a character string indicated by the selected mutual matching field, and move the obtained character string into the first program file, where the first identifier indicates that an operation manner corresponding to the selected mutual matching field is a first-type shelving operation.

Optionally, the moving module 1503 is specifically configured to:
select a mutual matching field from the plurality of mutual matching fields in the order indicated by the operation sequence;
when the selected mutual matching field does not include the second identifier, move a character string that is indicated by the selected mutual matching field and that is in the first program file; or
when the selected mutual matching field includes the second identifier, determine a movable character string based on a character string that is indicated by the selected mutual matching field and that is in the first program file and an overlapping character string that corresponds to the selected mutual matching field and that is stored in the target location, and move the movable character string in the first program file, where the second identifier indicates that an operation manner corresponding to the selected mutual matching field is a second-type shelving operation; and
when the selected mutual matching field is a last mutual matching field in the plurality of mutual matching fields, after moving the movable character string, move the overlapping character string into the first program file to be concatenated with the movable character string.

In this embodiment of this application, a restoration tool on the intelligent terminal is improved, so that the character strings that are indicated by the plurality of mutual matching fields and that are in the first program file are first moved in the order indicated by the operation sequence, and then the character strings that are indicated by the plurality of self-matching fields and the plurality of non-matching fields and that are in the first program file are moved in the order that is of the plurality of self-matching fields and the plurality of non-matching fields and that is indicated by the matching sequence. In this way, the second program file can be directly restored in a complete and non-overlapping manner based on the first program file by using the plurality of mutual matching fields, the plurality of self-matching fields, and the plurality of non-matching fields. In comparison with a related technology in which a complete second program file is first generated and then the first program file is replaced with the second program file, in this embodiment of this application, the second program file can be directly obtained by moving and modifying a character string in the first program file. That is, the second program file is obtained by moving the character string in the first program file and filling the non-matching data stream, so that occupation of space of a hard disk of the intelligent terminal can be reduced, and program update efficiency can be improved.

It should be noted that, when the program update apparatus provided in the foregoing embodiment updates a program, division into the foregoing functional modules is merely used as an example for description. In actual application, the foregoing functions may be allocated to different functional modules for implementation based on a requirement, that is, an internal structure of the apparatus is divided into different functional modules, to complete all or some of the functions described above. In addition, the program update apparatus provided in the foregoing embodiment and the program update method embodiment belong to a same idea. For a specific implementation process, refer to the method embodiment. Details are not described herein again.

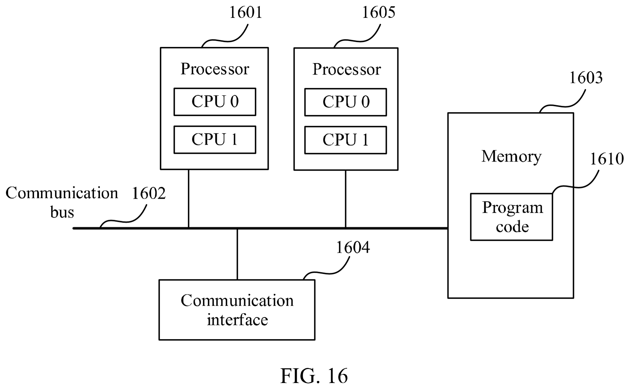

FIG. 16 is a diagram of a structure of a computer device according to an embodiment of this application. The computer device may be the foregoing server or intelligent terminal. The computer device includes at least one processor 1601, a communication bus 1602, a memory 1603, and at least one communication interface 1604.

The processor 1601 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 1602 is configured to transfer information between the foregoing components. The communication bus 1602 may be classified into an address bus, a data bus, a control bus, and the like. For ease of representation, only one thick line is used to represent the bus in the figure, but this does not mean that there is only one bus or only one type of bus.

The memory 1603 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory 1603 may exist independently, and is connected to the processor 1601 through the communication bus 1602. Alternatively, the memory 1603 may be integrated with the processor 1601.

The communication interface 1604 is configured to communicate with another device or a communication network through any apparatus such as a transceiver. The communication interface 1604 includes a wired communication interface, and may further include a wireless communication interface. The wired communication interface may be, for example, an ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 1601 may include one or more CPUs, for example, a CPU 0 and a CPU 1 shown in FIG. 16.

During specific implementation, in an embodiment, the computer device may include a plurality of processors, for example, the processor 1601 and a processor 1605 shown in FIG. 16. Each of the processors may be a single-core processor, or may be a multi-core processor. The processor herein may be one or more devices, circuits, and/or processing cores configured to process data (for example, computer program instructions).

During specific implementation, in an embodiment, the computer device may further include an output device 1606 and an input device 1607 (not shown in the figure). The output device 1606 communicates with the processor 1601, and may display information in a plurality of manners. For example, the output device 1606 may be a liquid crystal display (liquid crystal display, LCD), a light emitting diode (light emitting diode, LED) display device, a cathode ray tube (cathode ray tube, CRT) display device, a projector (projector), or the like. The input device 1607 communicates with the processor 1601, and may receive input of a user in a plurality of manners. For example, the input device 1607 may be a mouse, a keyboard, a touchscreen device, a sensor device, or the like.

In some embodiments, the memory 1603 is configured to store program code 1610 for executing the solutions of this application, and the processor 1601 may execute the program code 1610 stored in the memory 1603. The program code 1610 may include one or more software modules. The computer device may implement, by using the processor 1601 and the program code 1610 in the memory 1603, the program update method provided in the embodiment in FIG. 5 or FIG. 12.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in this embodiment of this application may be a non-volatile storage medium, that is, may be a non-transitory storage medium.

In other words, an embodiment of this application further provides a computer-readable storage medium. The computer-readable storage medium stores instructions, and when the instructions are run on a computer, the computer is enabled to perform the steps of the foregoing program update method.

An embodiment of this application further provides a computer program product including instructions. When the instructions are run on a computer, the computer is enabled to perform the steps of the foregoing program update method. In other words, a computer program is provided, so that when the computer program runs on a computer, the computer is enabled to perform the steps of the foregoing program update method.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the words "first" and "second" do not limit a quantity and an execution sequence, and the words "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, both the first program file and the second program file in embodiments of this application are obtained under sufficient authorization.

The foregoing descriptions are merely embodiments of this application, but are not intended to limit this application. Any modification, equivalent replacement, or improvement made without departing from the spirit and principle of this application should fall within the protection scope of this application.

## Claims

1. A program update method, applied to a server, wherein the method comprises:
determining a matching sequence based on a first program file and a second program file, wherein the matching sequence comprises a plurality of mutual matching fields, a plurality of self-matching fields, and a plurality of non-matching fields, wherein
the mutual matching field indicates that a character string in the second program file is the same as a character string in the first program file, the self-matching field indicates that a character string in the second program file is the same as another character string in the second program file, the non-matching field indicates that a character string in the second program file is the same as a character string in a non-matching data stream, the first program file and the second program file are program files of two different versions of a same program, and a version of the second program file is higher than a version of the first program file;
determining an operation sequence based on the plurality of mutual matching fields, wherein the operation sequence indicates an order of some or all of the plurality of mutual matching fields during restoration of the second program file, and when the second program file is restored in the order indicated by the operation sequence, character strings indicated by the plurality of mutual matching fields do not overlap; and
generating a differential package based on the matching sequence, the operation sequence, and the non-matching data stream, wherein the differential package indicates a difference between the first program file and the second program file.

2. The method according to claim 1, wherein the determining an operation sequence based on the plurality of mutual matching fields comprises:
determining a directed graph based on the plurality of mutual matching fields, wherein the directed graph indicates a topological order of the plurality of mutual matching fields; and
when the directed graph comprises a directed closed loop, performing loop removal on the directed graph to obtain the operation sequence.

3. The method according to claim 2, wherein the directed graph comprises at least one directed closed loop, the directed graph comprises a plurality of vertices, and the plurality of vertices one-to-one correspond to the plurality of mutual matching fields; and
the performing loop removal on the directed graph to obtain the operation sequence comprises:
removing a target vertex in each of the at least one directed closed loop, to obtain a vertex-removed directed graph, wherein the target vertex is a vertex in the directed closed loop; and
determining the operation sequence based on a topological order of vertices in the vertex-removed directed graph, wherein the operation sequence indicates an order of mutual matching fields in the plurality of mutual matching fields other than a target mutual matching field during restoration of the second program file, and the target mutual matching field is a mutual matching field corresponding to the target vertex.

4. The method according to claim 3, wherein the generating a differential package based on the matching sequence, the operation sequence, and the non-matching data stream comprises:
adding, to the non-matching data stream, a character string that is indicated by the target mutual matching field and that is in the first program file, to obtain an updated non-matching data stream;
converting the target mutual matching field in the matching sequence into a non-matching field, to obtain an updated matching sequence; and
generating the differential package based on the updated matching sequence, the operation sequence, and the updated non-matching data stream.

5. The method according to claim 2, wherein the directed graph comprises at least one directed closed loop, the directed graph comprises a plurality of vertices, and the plurality of vertices one-to-one correspond to the plurality of mutual matching fields; and
the performing loop removal on the directed graph to obtain the operation sequence comprises:
removing a target vertex in each of the at least one directed closed loop, to obtain a vertex-removed directed graph, wherein the target vertex is a vertex in the directed closed loop;
placing the target vertex at the end of the vertex-removed directed graph, to obtain a corrected topological order of the plurality of vertices; and
determining the operation sequence based on the corrected topological order of the plurality of vertices, wherein the operation sequence indicates an order of the plurality of mutual matching fields during restoration of the second program file.

6. The method according to claim 5, wherein the generating a differential package based on the matching sequence, the operation sequence, and the non-matching data stream comprises:
adding a first identifier to a target mutual matching field in the matching sequence, to obtain an updated matching sequence, wherein the first identifier indicates that an operation manner corresponding to the target mutual matching field is a first-type shelving operation, and the target mutual matching field is a mutual matching field corresponding to the target vertex; and
generating the differential package based on the updated matching sequence, the operation sequence, and the non-matching data stream.

7. The method according to claim 2, wherein the directed graph comprises at least one directed closed loop, the directed graph comprises a plurality of vertices, and the plurality of vertices one-to-one correspond to the plurality of mutual matching fields; and
the performing loop removal on the directed graph to obtain the operation sequence comprises:
removing a target edge in each of the at least one directed closed loop, to obtain an edge-removed directed graph, wherein the target edge is an outgoing edge of a vertex corresponding to a first mutual matching field and is an incoming edge of a vertex corresponding to a second mutual matching field, and the first mutual matching field and the second mutual matching field are two of the plurality of mutual matching fields; and
determining the operation sequence based on a topological order of vertices in the edge-removed directed graph, wherein the operation sequence indicates an order of the plurality of mutual matching fields during restoration of the second program file.

8. The method according to claim 7, wherein the generating a differential package based on the matching sequence, the operation sequence, and the non-matching data stream comprises:
adding a second identifier to the first mutual matching field in the matching sequence, to obtain an updated matching sequence, wherein the second identifier indicates that an operation manner corresponding to the first mutual matching field is a second-type shelving operation; and
generating the differential package based on the updated matching sequence, the operation sequence, and the non-matching data stream.

9. The method according to any one of claims 2 to 8, wherein the performing loop removal on the directed graph to obtain the operation sequence comprises:
when the directed graph comprises one directed subgraph having a directed closed loop, performing loop removal on the directed subgraph to obtain the operation sequence; or
when the directed graph comprises a plurality of directed subgraphs having directed closed loops, removing an edge between the plurality of directed subgraphs, and performing loop removal on each of the plurality of directed subgraphs to obtain the operation sequence.

10. A program update method, applied to an intelligent terminal, wherein the method comprises:
obtaining a differential package, wherein the differential package indicates a difference between a first program file and a second program file, the first program file and the second program file are program files of two different versions of a same program, and a version of the second program file is higher than a version of the first program file;
parsing the differential package to obtain a matching sequence, an operation sequence, and a non-matching data stream, wherein the matching sequence comprises a plurality of mutual matching fields, a plurality of self-matching fields, and a plurality of non-matching fields, the operation sequence indicates an order of the plurality of mutual matching fields during restoration of the second program file, the mutual matching field indicates that a character string in the second program file is the same as a character string in the first program file, the self-matching field indicates that a character string in the second program file is the same as another character string in the second program file, and the non-matching field indicates that a character string in the second program file is the same as a character string in the non-matching data stream; and
moving, in the order indicated by the operation sequence, character strings that are indicated by the plurality of mutual matching fields and that are in the first program file; moving, in an order of the plurality of self-matching fields and the plurality of non-matching fields in the matching sequence, character strings that are indicated by the plurality of self-matching fields and that are in the first program file; and moving, into the first program file, character strings that are indicated by the plurality of non-matching fields and that are in the non-matching data stream, to obtain the second program file.

11. The method according to claim 10, wherein before the moving, in the order indicated by the operation sequence, character strings that are indicated by the plurality of mutual matching fields and that are in the first program file, the method further comprises:
when a first mutual matching field comprises a first identifier, obtaining a character string that is indicated by the first mutual matching field and that is in the first program file, and storing the character string indicated by the first mutual matching field in a target location, wherein the first mutual matching field is any one of the plurality of mutual matching fields; or
when the first mutual matching field comprises a second identifier, obtaining an overlapping character string between a character string that is indicated by the first mutual matching field and that is in the first program file and a character string that is indicated by a second mutual matching field and that is in the second program file, and storing the overlapping character string in a target location, wherein the first mutual matching field is restored earlier than the second mutual matching field during restoration of the second program file.

12. The method according to claim 10 or 11, wherein the moving, in the order indicated by the operation sequence, character strings that are indicated by the plurality of mutual matching fields and that are in the first program file comprises:
selecting a mutual matching field from the plurality of mutual matching fields in the order indicated by the operation sequence; and
when the selected mutual matching field does not comprise the first identifier, moving a character string that is indicated by the selected mutual matching field and that is in the first program file; or
when the selected mutual matching field comprises the first identifier, obtaining, from the target location, a character string indicated by the selected mutual matching field, and moving the obtained character string into the first program file, wherein the first identifier indicates that an operation manner corresponding to the selected mutual matching field is a first-type shelving operation.

13. The method according to claim 10 or 11, wherein the moving, in the order indicated by the operation sequence, character strings that are indicated by the plurality of mutual matching fields and that are in the first program file comprises:
selecting a mutual matching field from the plurality of mutual matching fields in the order indicated by the operation sequence;
when the selected mutual matching field does not comprise the second identifier, moving a character string that is indicated by the selected mutual matching field and that is in the first program file; or
when the selected mutual matching field comprises the second identifier, determining a movable character string based on a character string that is indicated by the selected mutual matching field and that is in the first program file and an overlapping character string that corresponds to the selected mutual matching field and that is stored in the target location, and moving the movable character string in the first program file, wherein the second identifier indicates that an operation manner corresponding to the selected mutual matching field is a second-type shelving operation; and
when the selected mutual matching field is a last mutual matching field in the plurality of mutual matching fields, after the movable character string is moved, moving the overlapping character string into the first program file to be concatenated with the movable character string.

14. A program update apparatus, wherein the apparatus comprises:
a first determining module, configured to determine a matching sequence based on a first program file and a second program file, wherein the matching sequence comprises a plurality of mutual matching fields, a plurality of self-matching fields, and a plurality of non-matching fields, wherein
the mutual matching field indicates that a character string in the second program file is the same as a character string in the first program file, the self-matching field indicates that a character string in the second program file is the same as another character string in the second program file, the non-matching field indicates that a character string in the second program file is the same as a character string in a non-matching data stream, the first program file and the second program file are program files of two different versions of a same program, and a version of the second program file is higher than a version of the first program file;
a second determining module, configured to determine an operation sequence based on the plurality of mutual matching fields, wherein the operation sequence indicates an order of some or all of the plurality of mutual matching fields during restoration of the second program file, and when the second program file is restored in the order indicated by the operation sequence, character strings indicated by the plurality of mutual matching fields do not overlap; and
a generation module, configured to generate a differential package based on the matching sequence, the operation sequence, and the non-matching data stream, wherein the differential package indicates a difference between the first program file and the second program file.

15. The apparatus according to claim 14, wherein the second determining module comprises:
a directed graph unit, configured to determine a directed graph based on the plurality of mutual matching fields, wherein the directed graph indicates a topological order of the plurality of mutual matching fields; and
a loop removal unit, configured to: when the directed graph comprises a directed closed loop, perform loop removal on the directed graph to obtain the operation sequence.

16. The apparatus according to claim 15, wherein the directed graph comprises at least one directed closed loop, the directed graph comprises a plurality of vertices, and the plurality of vertices one-to-one correspond to the plurality of mutual matching fields; and
the loop removal unit is specifically configured to:
remove a target vertex in each of the at least one directed closed loop, to obtain a vertex-removed directed graph, wherein the target vertex is a vertex in the directed closed loop; and
determine the operation sequence based on a topological order of vertices in the vertex-removed directed graph, wherein the operation sequence indicates an order of mutual matching fields in the plurality of mutual matching fields other than a target mutual matching field during restoration of the second program file, and the target mutual matching field is a mutual matching field corresponding to the target vertex.

17. The apparatus according to claim 16, wherein the generation module is specifically configured to:
add, to the non-matching data stream, a character string that is indicated by the target mutual matching field and that is in the first program file, to obtain an updated non-matching data stream;
convert the target mutual matching field in the matching sequence into a non-matching field, to obtain an updated matching sequence; and
generate the differential package based on the updated matching sequence, the operation sequence, and the updated non-matching data stream.

18. The apparatus according to claim 15, wherein the directed graph comprises at least one directed closed loop, the directed graph comprises a plurality of vertices, and the plurality of vertices one-to-one correspond to the plurality of mutual matching fields; and
the loop removal unit is specifically configured to:
remove a target vertex in each of the at least one directed closed loop, to obtain a vertex-removed directed graph, wherein the target vertex is a vertex in the directed closed loop;
place the target vertex at the end of the vertex-removed directed graph, to obtain a corrected topological order of the plurality of vertices; and
determine the operation sequence based on the corrected topological order of the plurality of vertices, wherein the operation sequence indicates an order of the plurality of mutual matching fields during restoration of the second program file.

19. The apparatus according to claim 18, wherein the generation module is specifically configured to:
add a first identifier to a target mutual matching field in the matching sequence, to obtain an updated matching sequence, wherein the first identifier indicates that an operation manner corresponding to the target mutual matching field is a first-type shelving operation, and the target mutual matching field is a mutual matching field corresponding to the target vertex; and
generate the differential package based on the updated matching sequence, the operation sequence, and the non-matching data stream.

20. The apparatus according to claim 15, wherein the directed graph comprises at least one directed closed loop, the directed graph comprises a plurality of vertices, and the plurality of vertices one-to-one correspond to the plurality of mutual matching fields; and
the loop removal unit is specifically configured to:
remove a target edge in each of the at least one directed closed loop, to obtain an edge-removed directed graph, wherein the target edge is an outgoing edge of a vertex corresponding to a first mutual matching field and is an incoming edge of a vertex corresponding to a second mutual matching field, and the first mutual matching field and the second mutual matching field are two of the plurality of mutual matching fields; and
determine the operation sequence based on a topological order of vertices in the edge-removed directed graph, wherein the operation sequence indicates an order of the plurality of mutual matching fields during restoration of the second program file.

21. The apparatus according to claim 20, wherein the generation module is specifically configured to:
add a second identifier to the first mutual matching field in the matching sequence, to obtain an updated matching sequence, wherein the second identifier indicates that an operation manner corresponding to the first mutual matching field is a second-type shelving operation; and
generate the differential package based on the updated matching sequence, the operation sequence, and the non-matching data stream.

22. The apparatus according to any one of claims 15 to 21, wherein the loop removal unit is specifically configured to:
when the directed graph comprises one directed subgraph having a directed closed loop, perform loop removal on the directed subgraph to obtain the operation sequence; or
when the directed graph comprises a plurality of directed subgraphs having directed closed loops, remove an edge between the plurality of directed subgraphs, and perform loop removal on each of the plurality of directed subgraphs to obtain the operation sequence.

23. A program update apparatus, wherein the apparatus comprises:
a first obtaining module, configured to obtain a differential package, wherein the differential package indicates a difference between a first program file and a second program file, the first program file and the second program file are program files of two different versions of a same program, and a version of the second program file is higher than a version of the first program file;
a parsing module, configured to parse the differential package to obtain a matching sequence, an operation sequence, and a non-matching data stream, wherein the matching sequence comprises a plurality of mutual matching fields, a plurality of self-matching fields, and a plurality of non-matching fields, the operation sequence indicates an order of the plurality of mutual matching fields during restoration of the second program file, the mutual matching field indicates that a character string in the second program file is the same as a character string in the first program file, the self-matching field indicates that a character string in the second program file is the same as another character string in the second program file, and the non-matching field indicates that a character string in the second program file is the same as a character string in the non-matching data stream; and
a moving module, configured to: move, in the order indicated by the operation sequence, character strings that are indicated by the plurality of mutual matching fields and that are in the first program file, move, in an order of the plurality of self-matching fields and the plurality of non-matching fields in the matching sequence, character strings that are indicated by the plurality of self-matching fields and that are in the first program file, and move, into the first program file, character strings that are indicated by the plurality of non-matching fields and that are in the non-matching data stream, to obtain the second program file.

24. The apparatus according to claim 23, wherein the apparatus further comprises:
a second obtaining module, configured to: when a first mutual matching field comprises a first identifier, obtain a character string that is indicated by the first mutual matching field and that is in the first program file, and store the character string indicated by the first mutual matching field in a target location, wherein the first mutual matching field is any one of the plurality of mutual matching fields; or
a third obtaining module, configured to: when the first mutual matching field comprises a second identifier, obtain an overlapping character string between a character string that is indicated by the first mutual matching field and that is in the first program file and a character string that is indicated by a second mutual matching field and that is in the second program file, and store the overlapping character string in a target location, wherein the first mutual matching field is restored earlier than the second mutual matching field during restoration of the second program file.

25. The apparatus according to claim 23 or 24, wherein the moving module is specifically configured to:
select a mutual matching field from the plurality of mutual matching fields in the order indicated by the operation sequence; and
when the selected mutual matching field does not comprise the first identifier, move a character string that is indicated by the selected mutual matching field and that is in the first program file; or
when the selected mutual matching field comprises the first identifier, obtain, from the target location, a character string indicated by the selected mutual matching field, and move the obtained character string into the first program file, wherein the first identifier indicates that an operation manner corresponding to the selected mutual matching field is a first-type shelving operation.

26. The apparatus according to claim 23 or 24, wherein the moving module is specifically configured to:
select a mutual matching field from the plurality of mutual matching fields in the order indicated by the operation sequence;
when the selected mutual matching field does not comprise the second identifier, move a character string that is indicated by the selected mutual matching field and that is in the first program file; or
when the selected mutual matching field comprises the second identifier, determine a movable character string based on a character string that is indicated by the selected mutual matching field and that is in the first program file and an overlapping character string that corresponds to the selected mutual matching field and that is stored in the target location, and move the movable character string in the first program file, wherein the second identifier indicates that an operation manner corresponding to the selected mutual matching field is a second-type shelving operation; and
when the selected mutual matching field is a last mutual matching field in the plurality of mutual matching fields, after moving the movable character string, move the overlapping character string into the first program file to be concatenated with the movable character string.

27. A computer device, wherein the computer device comprises a memory and a processor, the memory is configured to store a computer program, and the processor is configured to execute the computer program stored in the memory, to implement steps of the method according to any one of claims 1 to 13.

28. A computer-readable storage medium, wherein the storage medium stores instructions, and when the instructions are run on the computer, the computer is enabled to perform steps of the method according to any one of claims 1 to 13.

29. A computer program, wherein the computer program comprises instructions, and when the instructions are run on the computer, the computer is enabled to perform steps of the method according to any one of claims 1 to 13.
